# EUROPEAN PATENT APPLICATION

(11) **EP 1 367 482 A2**
(43) Date of publication of application: **03.12.2003**
(21) Application number: 03253423.2
(22) Date of filing: 30.05.2003
(51) Int. Cl.: G06F 3/12

(54) **Information processing apparatus and print system**

(30) Priority: 31.05.2002 JP 2002160571; 23.05.2003 JP 2003146793
(71) Applicant: CANON KABUSHIKI KAISHA, Tokyo (JP)
(72) Inventor: Yagita, Takashi, c/o Canon Kabushiki Kaisha, Ohta-ku, Tokyo (JP); Morooka, Hidekazu, c/o Canon Kabushiki Kaisha, Ohta-ku, Tokyo (JP); Kitagata, Kei, c/o Canon Kabushiki Kaisha, Ohta-ku, Tokyo (JP); Kurotsu, Noriyoshi, c/o Canon Kabushiki Kaisha, Ohta-ku, Tokyo (JP); Wanda, Koichiro, c/o Canon Kabushiki Kaisha, Ohta-ku, Tokyo (JP); Kayama, Hiroyuki, c/o Canon Kabushiki Kaisha, Ohta-ku, Tokyo (JP); Ohshima, Masamichi, c/o Canon Kabushiki Kaisha, Ohta-ku, Tokyo (JP); Kikuchi, Koji, c/o Canon Kabushiki Kaisha, Ohta-ku, Tokyo (JP); Shirai, Kenichi, c/o Canon Kabushiki Kaisha, Ohta-ku, Tokyo (JP)
(74) Representative: Beresford, Keith Denis Lewis

(57) **Abstract**

There is provided an information processing apparatus that is capable of performing alternate processing even if alternate printing conditions set for processing apparatuses that perform alternate processing are different. The information processing apparatus generates a print job to be processed by a printer. Alternate printing conditions are set as conditions under which the printer is inhibited from performing printing. Whether alternate printing is to be performed or not by another printer is determined according to the set alternate printing conditions and the status of the printer. If it is determined that alternate printing is to be performed, the print job is transmitted to the other printer so that alternate printing can be performed by the other printer. The set alternate printing conditions are managed in association with each print job, and whether alternate printing is to be performed or not is determined according to the alternate printing conditions managed in association with each print job.

## Description

### BACKGROUND OF THE INVENTION

### Field of the Invention

The present invention relates to an information processing apparatus having an alternate processing function. In particular, the present invention relates to an information processing apparatus that generates print data, a print system, a printing control method applied to the information processing apparatus, and a printing control program.

### Description of the Related Art

Conventionally, in a print system including a plurality of printers, if any of the printers fails to continue printing due to an error such as "sheet exhaustion", "jam", or the like, another one of the printers performs alternate printing on alternate printing conditions such as "sheet exhaustion", "jam", and so forth set for each printer.

There are mainly two alternate printing methods. In one alternate printing method, a print server manages (spools) a print job and monitors the condition of an output printer that is to execute the job and if the output printer fails to continue printing due to some sort of failure, the print job managed by the print server is redirected to another printer so that the print job can be subjected to alternate printing (Japanese Laid-Open Patent Publication (Kokai) No. 11-327856).

In the second alternate printing method, a printer holds a received print job, and transfers the print job managed by itself to another printer via an interface when it fails to continue printing by a print engine thereof due to some sort of failure (Japanese Laid-Open Patent Publication (Kokai) No. 07-152506).

In the above described conventional print system, however, the user cannot specify the conditions under which alternate printing is to be carried out, and hence a method has been recently developed which enables the user to specify the conditions under which alternate printing is to be carried out. For example, the user sets alternate printing conditions for a specific printer, so that if an error occurs while the printer performs printing, the error is collated with the set alternate printing conditions, and if the error satisfies the alternate printing conditions, another printer is caused to perform alternate printing. This alternate printing method, however, has problems as described below.

(1) In the case where an alternate printer performs alternate printing on behalf of another printer, whether further alternate printing is to be performed due to an additional error or not depends on alternate printing conditions set for the alternate printer since the alternating conditions are independently set for the alternate printer. Specifically, if the alternating conditions set for the alternate printer differs from the alternating conditions set for the other printer, it is impossible to perform printing as desired.

For example, in the case where a job containing a large number of output pages is printed by one printer having such an alternate printing condition as "sheet exhaustion", if an alternate printer does not have such an alternate printing condition as "sheet exhaustion", alternate printing is not further performed if "sheet exhaustion" occurs in the one printer. Specifically, although it is preferred that alternate printing should be performed on a job containing a large number of pages upon "sheet exhaustion" in any printer, printing is stopped due to a difference in alternate printing conditions between printers.

Further, in the art disclosed in Japanese Laid-Open Patent Publication (Kokai) No. 11-327856 referred to above, in which general print data that has a data format which does not depend on the type of a printer or the like is spooled as intermediate data in advance, and after a printer to be used is decided, the general print data is transferred to an exclusive printer driver that outputs data corresponding to the printer, the following problems are encountered if alternate printing conditions are set for respective printers independently of each other.

(2) If printing is performed by a virtual printer driver that outputs general print data, it is necessary for an exclusive printer driver, which discharges output data corresponding to the output printer, to output print data again. Therefore, if different alternate printing conditions are set for respective printers, even if the user selects the virtual printer driver that outputs general print data according to an application program, alternate printing is performed according to alternate printing conditions set for a printer corresponding to the exclusive printer driver that actually discharges output data, and hence the user cannot set the alternate conditions freely.

Further, alternate printing conditions having been used in recent years are set such that alternate printing is automatically performed, and hence the following problem is encountered.

(3) In a print system that performs automatic alternate printing, alternate printing is performed upon a printer error even if alternate printing is not desired when this printer error occurs. For example, even in the case where a printer error such as off-line occurs in a printer which is performing automatic alternate printing and hence it is unnecessary to perform alternate printing, another printer performs alternate printing.

### SUMMARY OF THE INVENTION

It is a concern of the present invention to provide an information processing apparatus, a print system, a printing control method applied to the information processing apparatus, and a printing control program that make it possible to perform alternate processing (alternate printing) even if alternate printing conditions set for alternate processing apparatuses are different.

It is another concern of the present invention to provide an information processing apparatus, a print system, a printing control method applied to the information processing apparatus, and a printing control program that make it possible to perform alternate printing under alternate printing conditions set for a processing apparatus selected by the user.

A further concern of the present invention to provide an information processing apparatus, a print system, a printing control method applied to the information processing apparatus, and a printing control program that make it possible to switch to manual alternate printing if automatic alternate printing is not desired.

In a first aspect of the present invention, there is provided an information processing apparatus that generates a print job to be printed by a first printing device, comprising a setting device that sets alternate printing conditions under which the first printing device is inhibited from performing printing, a determination device that determines whether alternate printing is to be performed by a second printing device according to the alternate printing conditions set by the setting device and a status of the first printing device, and an alternate processing device operable when the determination device determines that alternate printing is to be performed, for transmitting the print job to the second printing device so that alternate printing is performed on the print job by the second printing device, wherein the alternate processing device manages the alternate printing conditions set by the setting device in association with the print job, and wherein the determination device determines whether alternate printing is to be performed according to the alternate printing conditions managed in association with the print job.

Preferably, the information processing apparatus according to the first aspect further comprises a physical printer managing device that receives a print job generated by a printer driver and manages the print job, and wherein the setting device sets alternate printing conditions for the physical printer managing device, and the alternate processing device manages the alternate printing conditions set for the physical printer managing device and managed in association with the print job received by the physical printer managing device.

More preferably, the alternate processing device transmits the print job to the second printing device of same type as the first printing device corresponding to the printer driver to cause the second printing device to perform alternate printing.

It is preferable that the information processing apparatus according to the present invention further comprises a virtual printer driver that generates a general print file containing general document data independent of a printing device according to drawing instructions outputted from an application, and a logical printer managing device that receives the general print file generated by the virtual printer driver and manages the general print file, and wherein the setting device sets alternate printing conditions for the logical printer managing device, and the alternate processing device manages the alternate printing conditions set for the logical printer managing device in association with a print job of the general print file received by the logical printer managing device.

Preferably, the alternate processing device transmits the print job of the general print file to one selected from among a plurality of printing devices as the second printing device independent of the first printing device designated first for output to cause the selected one printing device to perform alternate printing.

More preferably, the alternate processing device is operable when alternate printing is performed, for outputting drawing instructions to a printer driver of the selected one printing device based on the general print file managed by the logical printer managing device.

It is advantageous that the setting device sets automatic alternate printing conditions under which alternate processing is automatically performed and manual alternate printing conditions under which alternate processing is manually performed as the alternate printing conditions set for the logical printer managing device, and the alternate processing device manages the automatic processing conditions and the manual processing conditions set for the logical printer managing device in association with print jobs of general print files received by the logical printer managing device.

In a second aspect of the present invention, there is provided a print system comprising a plurality of first printing devices, and an information processing apparatus that generates a print job to be printed by any of the first printing apparatuses, the information processing apparatus comprising a setting device that sets alternate printing conditions under which the first printing device is inhibited from performing printing, a determination device that determines whether alternate printing is to be performed by a second printing device according to the alternate printing conditions set by the setting device and a status of the first printing device, and an alternate processing device operable when the determination device determines that alternate printing is to be performed, for transmitting the print job to the second printing device so that alternate printing is performed on the print job by the second printing device, wherein the alternate processing device manages the alternate printing conditions set by the setting device in association with the print job, and wherein the determination device determines whether alternate printing is to be performed according to the alternate printing conditions managed in association with the print job.

In a third aspect of the present invention, there is provided a printing control method of controlling printing performed by an information processing apparatus that generates a print job to be printed by a first printing device, comprising a setting step of setting alternate printing conditions under which the first printing device is inhibited from performing printing, a determination step of determining whether alternate printing is to be performed by a second printing device according to the alternate printing conditions set by the setting step and a status of the first printing device, and an alternate processing step of transmitting the print job to the second printing device so that alternate printing is performed on the print job by the second printing device when it is determined in the determination step that alternate printing is to be performed, and wherein the alternate processing step comprises managing the alternate printing conditions set by the setting step in association with the print job, and wherein the determination step comprises determining whether alternate printing is to be performed according to the alternate printing conditions managed in association with the print job.

In a fourth aspect of the present invention, there is provided a printing control program for implementing a printing control method applied to an information processing apparatus that generates a print job to be printed by a first printing device, comprising a setting module for setting alternate printing conditions under which the first printing device is inhibited from performing printing, a determination module for determining whether alternate printing is to be performed by a second printing device according to the alternate printing conditions set by the setting module and a status of the first printing device, and an alternate processing module for transmitting the print job to the second printing device so that alternate printing is performed on the print job by the second printing device when the determination module determines that alternate printing is to be performed, and wherein the alternate processing module manages the alternate printing conditions set by the setting module in association with the print job, and wherein the determination module determines whether alternate printing is to be performed according to the alternate printing conditions managed in association with the print job.

According to the present invention, in the information processing apparatus, which generates a print job to be printed by a first printing device, and in which alternate printing conditions are set under which the first printing device is inhibited from performing printing, it is determined whether or not alternate printing is to be performed by a second printing device according to the set alternate printing conditions and the status of the first printing device, and if it is determined that alternate printing is to be performed, the print job is transmitted to the second printing device so that the second printing device can perform alternate printing on the print job. The information processing apparatus according to the present invention is characterized in that the set alternate printing conditions are managed in association with each print job, and it is determined whether. alternate printing is to be performed or not according to the alternate printing conditions managed in association with each print job. As a result, it is possible to perform alternate printing even if alternate printing conditions set for printing devices which perform alternate printing are different, so that the user can obtain his/her desired alternate printing results.

The above and other features, and advantages of the invention will become more apparent from the following detailed description taken in conjunction with the accompanying drawings.

### BRIEF DESCRIPTION OF THE DRAWINGS

FIG. 1 is a block diagram showing the arrangement of a print system according to a first embodiment of the present invention;
FIG. 2 is a block diagram useful in explaining the construction of a client as an information processing apparatus appearing in FIG. 1;
FIG. 3 is a diagram showing an example of a memory map of a RAM in FIG. 2;
FIG. 4 is a diagram showing an example of a memory map of an FD in FIG. 2;
FIG. 5 is a view showing the relationship between an FD drive in FIG. 2 and an FD to be inserted into the FD drive;
FIG. 6 is a diagram useful in explaining processing of a print job issued by an application program;
FIG. 7 is a diagram showing an example of the structure of a general print file;
FIG. 8 is a diagram showing the relationship in print job processing between a print system provided by Windows (registered trademark) and a print job control system;
FIG. 9 is a diagram showing logical queue information set in a logical queue;
FIG. 10 is a diagram showing automatic alternate printing conditions set in the logical queue having an automatic alternate printing function;
FIG. 11 is a diagram showing automatic alternate printing suppressing conditions set in the logical queue having the automatic alternate printing function;
FIG. 12 is a diagram showing an example of a user interface screen that is displayed to select an alternate printer when alternate printing is manually performed on a print job managed by the logical queue;
FIG. 13 is a diagram showing alternate printing conditions set in a printer queue having an alternate printing function;
FIG. 14 is a diagram showing original job information;
FIG. 15 is a diagram showing job information on a member job;
FIG. 16 is a diagram showing PDL job information;
FIG. 17 is a diagram showing a flow of print data in an automatic alternate printing process and a manual alternate printing process;
FIG. 18 is a flow chart showing an alternate printing process according to the first embodiment;
FIG. 19 is a flow chart showing a continued part of the flow chart in FIG. 18;
FIG. 20 is a flow chart showing an alternate printing process according to a second embodiment of the present invention;
FIG. 21 is a flow chart showing a continued part of the flow chart in FIG. 20;
FIG. 22 is a view showing an example of a user interface screen for setting logical queue information in the logical queue;
FIG. 23 is a view showing an example of a user interface screen for setting logical queue information in the logical queue;
FIG. 24 is a view showing an example of a user interface screen for setting logical queue information in the logical queue;
FIG. 25 is a view showing an example of a user interface screen for setting automatic alternate printing conditions as logical queue information in the logical queue;
FIG. 26 is a view showing an example of a user interface screen for setting automatic alternate printing conditions;
FIG. 27 is a view showing an example of a user interface screen for setting automatic alternate printing suppressing conditions;
FIG. 28 is a view showing an example of a user interface screen for setting logical queue information in the printer queue;
FIG. 29 is a view showing an example of a user interface screen for setting logical queue information in the printer queue;
FIG. 30 is a view showing an example of a user interface screen for setting logical queue information in the printer queue;
FIG. 31 is a view showing an example of a user interface screen for setting manual alternate printing conditions;
FIG. 32 is a view showing an example of a user interface screen of a job control print manager;
FIG. 33 is a view showing an example of a user interface screen for setting print properties in the logical queue;
FIG. 34 is a view showing an example of a POP-UP dialogue screen which indicates an alternate printing notification issued when manual alternate printing conditions are satisfied; and
FIG. 35 is a view showing an example of a user interface screen that is displayed to select an alternate printer when alternate printing is manually performed on a print job managed by the logical queue.

### DETAILED DESCRIPTION OF THE PREFERRED EMBODIMENTS

The present invention will now be described in detail with reference to the drawings showing preferred embodiments thereof.

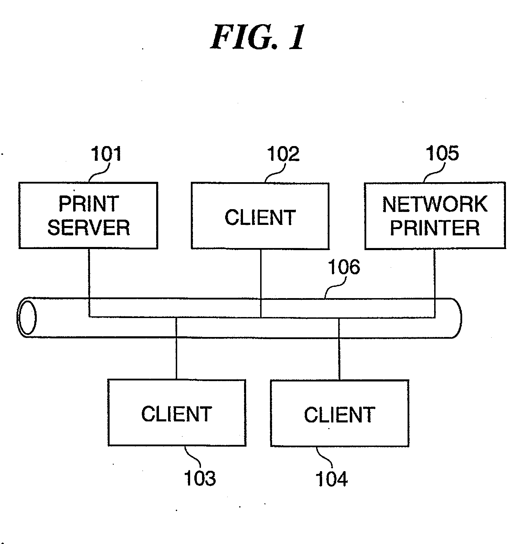

FIG. 1 is a block diagram showing a print system according to a first embodiment of the present invention. It should be noted that a plurality of client computers are included in the print system according to the present embodiment, but a single client computer may be included.

In FIG. 1, reference numerals 102 to 104 each denote a client computer (hereinafter refereed to as "the client"), which is connected to a network 106 via a network cable such as Ethernet (registered trademark), is capable of executing a variety of programs such as application programs, and is equipped with a printer driver having a function of converting print data into a print language suitable for a printer. Note that the printer driver supports a plurality of printers.

Reference numeral 101 denotes a print server as an information processing apparatus according to the present embodiment, which is connected to the network 106 via a network cable, and is capable of storing files used on the network 106 and monitoring the usage condition of the network 106. The print server 101 manages a plurality of printers connected to the network 106. The clients 102 to 104 and the print server 101 are implemented by ordinary information processing apparatuses, and store respective executable printing control programs for executing different printing control methods. Further, the print server 101 is adapted to have the functions of the clients 102 to 104. Thus, the information processing apparatus according to the present embodiment may operate as either a client or a server (print server). For example, in the case where the print system is configured such that a client directly transmits print data to a printer via an LPR, the client should operate as the information processing apparatus according to the present embodiment. Also, in the case where the print system is configured that a client makes a printing request to a print server and a print server issues a print job while monitoring a printer, the print server should operate as the information processing apparatus according to the present invention.

Further, the print server 101 according to the present embodiment is capable of storing and printing print jobs containing print data for which a printing request has been issued by any of the clients 102 to 104, or receiving only job information containing no print data from the clients 102 to 104, managing the order of printing by the clients 102 to 104, permitting the clients 102 to 104 corresponding to the order to transmit print jobs containing print data, and acquiring a variety of information about the status of a network printer 105 and print jobs to notify the clients 102 to 104 of such information.

The network printer 105 is a printing device that is connected to the network 106 via a network interface, not shown, and is capable of analyzing print jobs containing print data transmitted from the clients 102 to 104, converting the print data into dot images page by page, and printing the print data page by page. The network printer 105 may be implemented by a variety of printers such as an electrophotographing laser beam printer based on electrophotography, an ink jet printer, a thermal printer, and so forth.

The network 106 is connected to the clients 102 to 104, the print server 101, the network printer 105, and so forth.

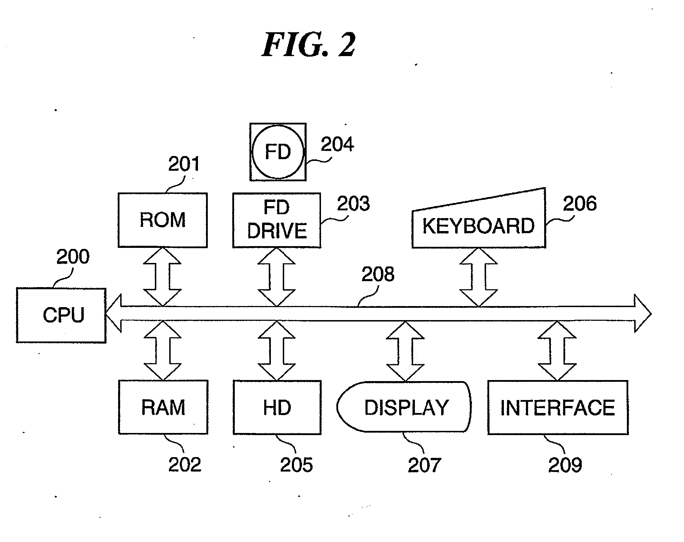

FIG. 2 is a block diagram useful in explaining the construction of any of the clients 102 to 104 as the information processing apparatuses in FIG. 1. The hardware construction of the print server 101 is identical with or similar to those of the clients 102 to 104, and hence FIG. 2 shows the construction of both the clients 102 to 104 and the print server 101.

In FIG. 2, a CPU 200 as a control means provides control to execute application programs, a printer driver program, an OS (operating system), a network printer control program of the present invention, and so forth, and to temporarily store information, files, and so forth required for executing programs in a RAM 202.

A ROM 201 as a storage means stores a variety of programs such as a basic I/O program and a variety of data such as font data, template data, and so forth for document processing. The RAM 202 as a temporary storage means functions as a main memory, a work area, and so forth for the CPU 200.

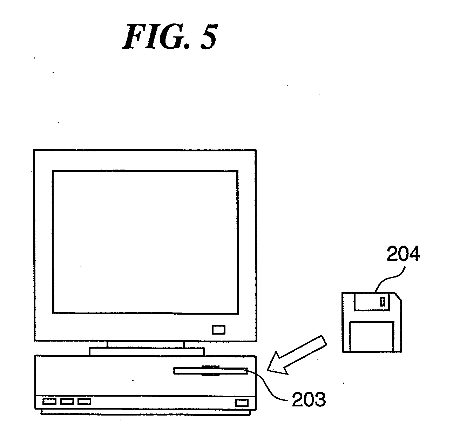

Reference numeral 203 denotes a floppy (registered trademark) disk (FD) drive 203 as a storage medium reading means. As shown in FIG. 5, referred to later, programs stored in a floppy (registered trademark) disk (FD) 204 as a storage medium can be loaded into the system via the FD drive 203. It should be noted that the storage medium is not limited to an FD, but a CD-ROM, a CD-R, a CD-RW, a CD-RW, a PC card, a DVD-ROM, a DVD-RAM, a DVD-RW, a DVD+RW, an IC memory card, an MO, a memory stick, a hard disk, an optical disk, a magneto-optical disk, a magnetic tape, or a download carried out via a network may be used.

The FD 204 stores computer-readable programs.

The HD 205 as one of external storage means functions as a mass-storage memory for storing application programs, a printer driver program, an OS, a network printer control program, related programs, and so forth. Further, a spooler as a spooling means is stored in the HD 205. The spooling means is a client spooler for the clients 102 to 104, and is a server spooler for the print server 101. Further, in the print server 101, a table which stores job information received from the clients 102 to 104 and is used to control the print order is generated and stored in the HD 205.

Reference numeral 206 denotes a keyboard as an instruction input means for an operator of the clients 102 to 104 or a manager of the print server 101 to input instructions such as device control commands to the clients 102 to 104 or the print server 101.

Reference numeral 207 denotes a display as a display means for displaying commands inputted via the keyboard 206 and the status of the network printer 105. A system bus 208 controls the flow of data in the clients 102 to 104 or the print server 101.

Reference numeral 209 denotes an interface as an input/output means through which the information processing apparatus exchanges data with external apparatuses.

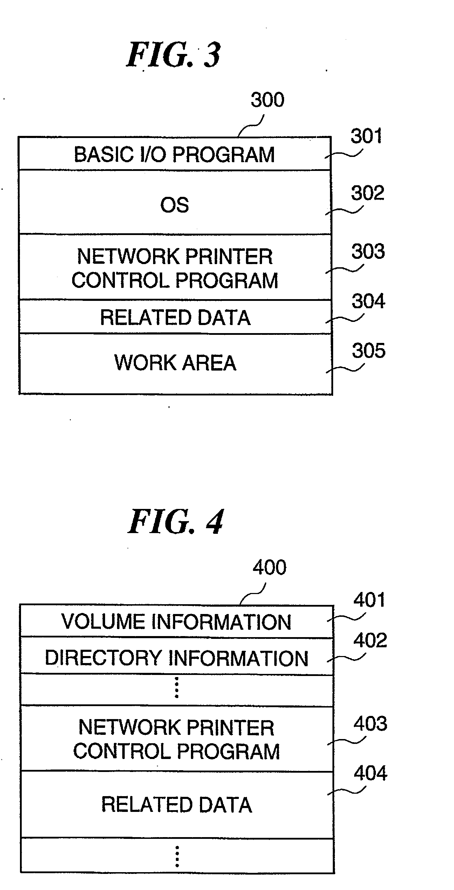

FIG. 3 is a diagram showing an example of a memory map of the RAM 202 in a state in which the network printer control program loaded from the FD 204 into the RAM 202 is ready to be executed.

Although in the present embodiment, it is assumed that the network printer control program and its related. data are directly loaded from the FD 204 into the RAM 202, the present invention is not limited to this, but each time the network printer control program is operated by loading it from the FD 204, the network printer control program and its related data may be loaded from the HD 204 in which the network printer control program is installed in advance.

Further, the storage medium storing the network printer control program is not limited to an FD, but a CD-ROM, a CD-R, a CD-RW, a CD-RW, a PC card, a DVD-ROM, a DVD-RAM, a DVD-RW, a DVD+RW, an IC memory card, an MO, a memory stick, a hard disk, an optical disk, a magneto-optical disk, a magnetic tape, or a ROM may be used. Further, the network printer control program may be stored in advance in the ROM 201 to constitute a memory map thereof so that it can be directly executed by the CPU 200. Further, the hardware of the above described apparatuses may be replaced by software capable of realizing the functions of the above described apparatuses.

Further, the network printer control program according to the present embodiment will be simply referred to as "the print control program" unless otherwise specified. In the clients 102 to 104, the print control program includes programs for providing control to give an instruction for changing a printer that is to output a print job and an instruction for changing the print order, and on the other hand, in the print server 101, the printer control program includes programs for controlling the order of print jobs and giving a notification of completion of a print job, a request to change output printers, and so forth.

As the print control program according to the present embodiment described above, modules installed in the clients 102 to 104 and modules installed in the print server 101 may be provided separately from each other, or one print control program may selectively function for the clients 102 to 104 or for the print server 101 according to the environment where the print control program is executed. Alternatively, modules functioning for the clients 102 to 104 and modules functioning for the print server 101 may be installed into one information processing apparatus so that these modules can be operated at the same time or operated artificially in parallel on time-sharing basis.

Reference numeral 301 denotes a basic I/O program having, for example, an IPL (initial program loading) function of starting the operation of the OS read from the HD 205 into the RAM 202 when power supply for the information processing apparatus is turned on.

Reference numeral 302 denotes the OS, and reference numeral 303 denotes the network printer control program stored in a region reserved on the RAM 202. Reference numeral 304 denotes related data stored in a region reserved on the RAM 202. Reference numeral 305 denotes a work area reserved for the CPU 200 to execute the print control program according to the present embodiment.

FIG. 4 is a diagram showing an example of a memory map of the FD 204 in FIG. 2.

In FIG. 4, reference numeral 400 denotes the contents of data stored in the FD 204; 401, volume information indicative of data; 402, directory information; 403, a network printer control program as the print control program according to the present embodiment; and 404, its related data. The network printer control program 403 is created by programming a flow chart according to the present embodiment, described later, and is common to the clients 101 to 104 and the print server 101 in the present embodiment.

FIG. 5 is a view showing the relationship between the FD drive 203 in FIG. 2 and the FD 204 to be inserted into the FD drive 203.

The FD 204 in FIG. 5 stores the network printer control program according to the present embodiment and its related data.

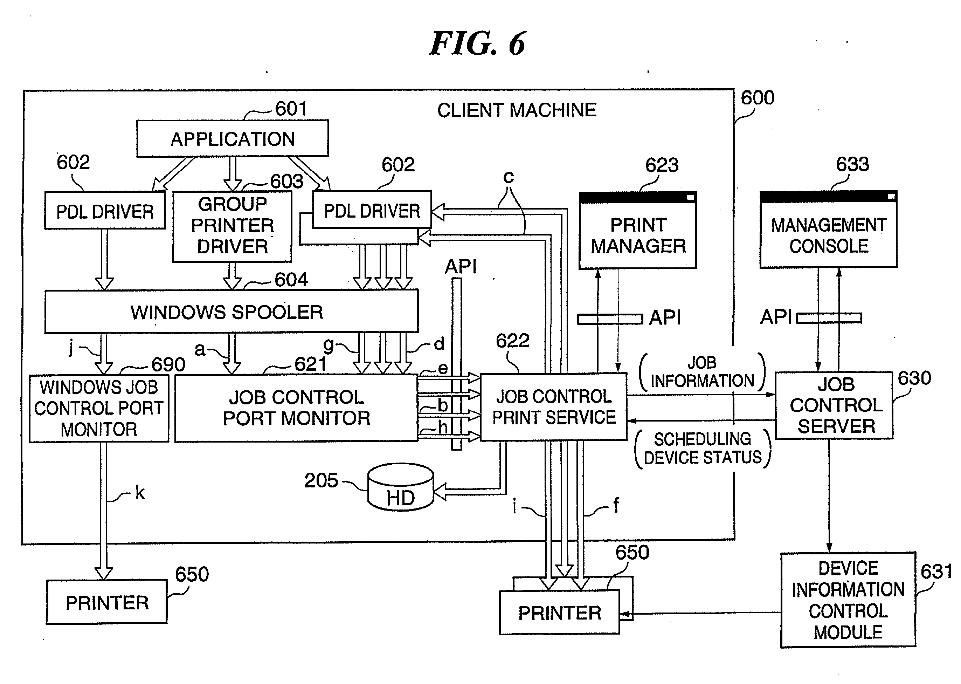

A description will now be given of a print job control system according to the present embodiment, which performs printing processing such as distributed printing, broadcast printing, alternate printing, or the like, described later, using a plurality of printers. It should be noted that the print job control system performs printing processing according to the above described print control program. The printing control program according to the present embodiment is comprised of a plurality of modules, each of which will be described later with reference to FIG. 6. Further, in the present embodiment, a driver that instructs print settings to all of printer drivers corresponding to respective printers and generates data (general document data) for generating a general print file, described later, used when a de-spooler, described later in detail, notifies each printer driver of a drawing command or instruction is referred to as "the group printer driver" (or "the virtual printer driver"). Further, each of printer drivers depending on the types, etc. of respective printers is referred to as "the member printer driver" (or "the exclusive printer driver").

FIG. 6 is a diagram useful in explaining processing performed on a print job issued by an application program. Specifically, FIG. 6 shows how a print job issued by an ordinary application program such as one according to Microsoft Word (registered trademark) by a client of the print job control system is processed by the print job control system.

In FIG. 6, reference numeral 600 denotes a client machine on which client modules of the print job control system operate (corresponding to the clients 102 to 104)

Normally, upon issuance of a printing instruction, the application program (hereinafter referred to as "the application"), generates a sequence of drawing commands through a graphic function of the OS, and transfers the sequence of drawing commands to a Windows (registered trademark) spooler 604 via a printer driver. The Windows (registered trademark) spooler 604 transfers print job data to a port monitor selected by the user and causes the port monitor to transmit the print job data to a printer.

The application 601 is an ordinary application operated on the OS, and has a document creating function, a document storing function, and a document printing function. The application 601 is capable of giving a printing instruction by designating an output driver registered in the system by the user. It is assumed that three printer drivers are used in the system.

First, each of PDL drivers 602 is an ordinary printer driver (exclusive printer driver), which generates PDL print data according to drawing commands transmitted from the application 601. Assuming that one of printers 650 is set as a printer to output print data generated by one of PDL drivers 602, the print data generated by the PDL driver 602 is outputted to a Windows (registered trademark) job control port monitor 690 via the Windows spooler 604, and transmitted to the printer 650 via the Windows job control port monitor 690. On the other hand, if a job control port monitor 621 is set as a destination of print data outputted from the PDL driver 602, the print data generated by the PDL driver 602 is outputted to the job control port monitor 621.

The job control port monitor 621 is a component element characterizing the present embodiment, which operates in cooperation with a job control print service 622 (corresponding to "alternate processing means" of the present invention) via an API, described later, and is capable of realizing a variety of functions such as a print job managing function, an output printer deciding function, and so forth.

To print the print data inputted from the PDL driver 602, the job control print service 622 stores and manages the PDL print data in the HD 205, and transmits the print data to the associated printer 650. The reason why print data stored in the HD 205 is managed even after the transmission thereof is to ensure printing by performing alternate printing when printing by the printer 650 becomes impossible. The details of alternate printing will be described later.

On the other hand, a group printer driver (virtual printer driver) 603 generates general document data in a format which does not depend on the type of a printer or the like, according to drawing commands transmitted from the application program 601. The general document data is outputted to the job control port monitor 621 via the Windows spooler 604.

To print the general document data inputted from the group printer driver 603, the job control print service 622 operates like the application 601 to generate a sequence of drawing commands through a graphic function of the OS, and outputs the sequence of drawing commands to the associated PDL driver 602. The outputted drawing commands are inputted again as PDL print data to the job control port monitor 621, and outputted to the printer 650 that conforms to the format of the print data via the job control print service 622.

It should be noted that the print control program according to the present embodiment is comprised of modules corresponding respectively to the group printer driver 603, the job control port monitor 621, and the job control print service 622. The details of the modules will be described later.

In the present embodiment, the user designates the job control port monitor 621 which is for the print job control system as the destination of data outputted from the group printer driver 603 or the PDL drivers 602 in advance, and gives a printing instruction.

In response to a printing instruction from the user, the application 601 generates drawing commands through the OS. The group printer driver 603 having received the drawing command generates general document data for generating a general print file, and transmits the general document data as print job data to the job control port monitor 621, not to a port monitor that transmits print job data to the printer 650.

It is preferred that the general document data is created in PDF developed by Adobe Systems Incorporated in the U.S. or the like. The general print file is a print file in a data format which does not depend on the type of a printer or the like, and in the present embodiment, it is assumed that the general print file is comprised of general document data to which printing instructions (job ticket) including print setting information is added.

The job control port monitor 621 does not transmit print job data to the printer 650 but to the job control print service 622. The job control print service 622 has a function of managing information about job/device status managed by a job control server 630.

Further, in the case where printers (devices) and clients carry out peer-to-peer communication with each other, the job control print service 622 manages information about device/job status obtained from the printers, and gives predetermined instructions to the printers. This is equivalent to a function of managing device information and job information on the plurality of printers 650.

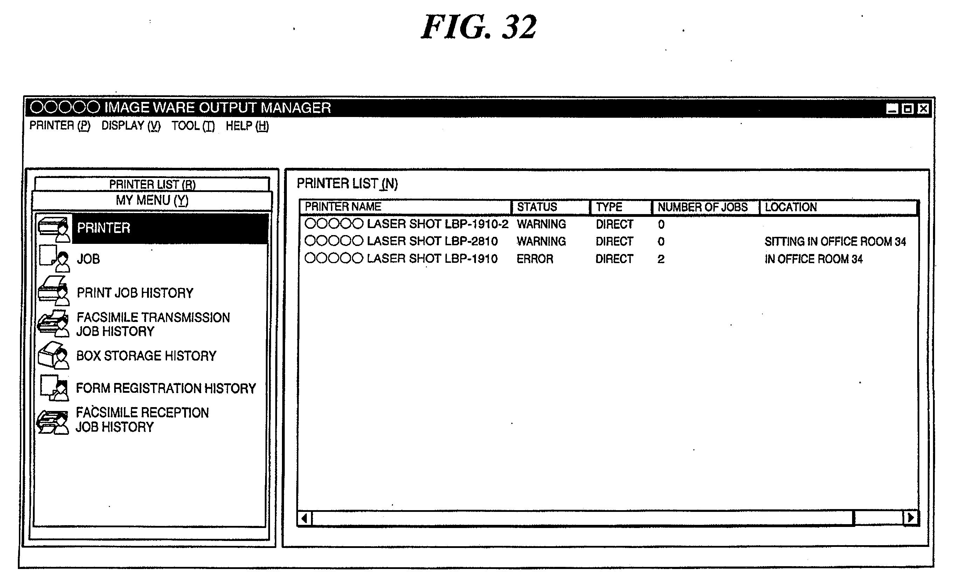

A print job control system print manager (hereinafter referred to as "the job control print manager" or "the print manager") 623 is a program that provides interface (UI) for the user to check the status of print jobs in the job control print service 622 or to perform operations on print jobs. FIG. 32 shows an example of a user interface (UI) screen of the job control print manager 623. On this user interface screen, a plurality of windows such as a printer list window showing a list of names and statuses of printers managed by a print management module (comprised of the job control port monitor 621, the job control print service 622, and the job control print manager 623) according to the present embodiment, a job list window showing a list of print jobs managed by the print management module, a history window showing a list of print job histories, and so forth can be displayed such that they may be switched from each other.

The job control print manager 623 transmits and receives information to and from the job control print service 622 via an interface (API) of software of the job control print service 622, and acquires external printer status information managed by the job control print service 622 as an event (notification of status change). Examples of the event to be acquired include error/warning information indicative of sheet exhaustion, a failure in communication between a client and a device, memory capacity shortage, discharged sheet tray full, and a notification of recovery from an error status.

The print job control system server (hereinafter referred to as "the job control server") 630 provides integrated control (scheduling) of the timing in which the job control print service 622 on each client 600 transmits print job data to the printer 650. The job control server 630 also monitors the status of each printer, such as print execution status, power control status, failure (e.g., jam), etc. of each printer with which the job control server 630 is capable of communicating via the network, and notifies the job control print service 622 of the event as notification of status change.

Here, the job control print service 622 may acquire the event as notification of status change directly from each printer.

A print job control system management console (hereinafter referred to as "the job control management console") 633 is capable of monitoring the entire print job control system by exchanging information and instructions with the job control server 630 via an API which provides interface for access from software of the job control server 630.

Further, the job control server 630 communicates with each printer 650 by means of a device information control module 631 to acquire information about a print job in each printer 650 and the operative status of each printer 650 or perform operations on such information. The acquired information can be transferred to the job control print service 622 in the client 600.

A description will now be given of printing performed through the group printer driver 603 according to the present embodiment.

The group printer driver 603 generates general document data as described above according to a sequence of drawing commands generated by the application 601. The general document data is converted into a general print file in an intermediate format, which does not depend on the type of a printer or the like, by the job control print service 622. The structure of the general print file will be described later.

The reason why the group printer driver 603 generates the general document data is to enable a printer driver corresponding to an alternate printer to generate print data suitable for the alternate printer . in the case where the output printer to output printed data is changed by alternate processing or the like. Therefore, if print data is inputted from the group printer driver 603, it is possible to select any printer as an alternative. In the alternate processing, the job control print service 622 as the alternate processing means transmits a print job of the general print file so that any of the plurality of printers independent of a printer designated first as an output printer can perform alternate printing. It should be noted that, if print data depending on the type of a printer or the like is inputted from the PDL driver 602 to the job control port monitor 621, the alternate printer is limited to one capable of interpreting the same PDL (for example, a printer of the same type as the printer designated first as the output printer).

The general print file generated by the group printer driver 603 is guided from the Windows (registered trademark) spooler 604 to the job control print service 622 via the job control port monitor 621 along a route indicated by arrows a and b in FIG. 6, as described above. The job control print service 622 generates drawing commands based on the general print file according to the type of job control executed in response to this print job and outputs the drawing commands to the PDL driver 602 via a drawing function (GDI) of the OS (along a path indicated by an arrow c in FIG. 6) as is the case with the application 601. Specifically, if the received print job is a print job in the format of a general print file outputted from the group printer driver 603, the job control print service 622 outputs drawing commands (GDI function) to the drawing function of the OS, and outputs drawing commands (DDI function) converted by the drawing function of the OS to the PDL driver 602. On the other hand, if the received print job is a PDL print job data file outputted from the PDL driver 602, the job control print service 622 determines whether a print queue of the printer 650 is free or not, and outputs the print data to the printer 650 according to the determination result. Here, in the case where the received print job is a print job in the format of a general print file, the print job follows the route c in FIG. 6, and the PDL driver 602 converts the drawing commands (DDI function) into a PDL print data file that can be interpreted by the printer 650.

In FIG. 6, two arrows c indicate an example in which two member jobs are generated in the case where the job control print service 622 provides job control to divide a print job into two (distributed printing control). The PDL file generated by the PDL driver 602 is transferred again to the job control print service 622 (along a path indicated by an arrow e in FIG. 6) via the Windows (registered trademark) spooler 604 and the job control port monitor 621 (along a path indicated by an arrow d in FIG. 6). The job control print service 622 transmits the PDL print job data to the printer 650 according to an instruction from the job control server 630 (along a path indicated by an arrow f in FIG. 6).

The job control print service 622 logically divides one general print file into a plurality of print jobs and transmits them to different printers, or retransmits print job data transmitted once to another printer, according to printing instructions in the general print file. In FIG. 6, the arrows c, d, e, and f indicate the route of job data in such a case.

On the other hand, there is a case where specific application software creates a general print file and directly outputs it as a print job. The case where specific application software creates a general print file is different in the way of transferring information to the group printer driver 603 and the way of processing performed by the group printer driver 603 from the case where ordinary application software creates a general print file.

In the case where ordinary application software creates a general print file as described above, when transferring drawing information (DDI function) to the group printer driver 603 via the OS, as is the case with a normal printer driver, the ordinary application software calls a Windows (registered trademark) GDI function, transfers the GDI function to the drawing function of the OS, which in turn converts the GDI function into a DDI function, and transfers the DDI function to the group printer driver 603, the group printer driver 603 then generates general document data according to the DDI function, and the job control print service 622 converts the generated general document data into a general print file.

On the other hand, in the case where specific application software creates a general print file, the specific application software has the general print file in advance, and supplies it to the group printer driver 603 directly or through the drawing function of the OS. As the need arises, the group printer driver 603 rewrites printing instructions in the general print file according to a print method set in advance, and transmits the resulting print file to the Windows (registered trademark) spooler 604.

A description will now be given of processing performed in the case where the job control port monitor 621 is set as the destination of data outputted from a PDL driver.

In FIG: 6, the PDL driver 602 generates a PDL print data file (hereinafter referred to as "the PDL file") capable of being interpreted by the printer 650 according to a sequence of drawing commands generated by the application 601. The PDL file is guided from the Windows (registered trademark) spooler 604 to the job control print service 622 (along a path indicated by an arrow h in FIG. 6) via the job control port monitor 621 (along a path indicated by an arrow g in FIG. 6). The job control print service 622 transmits PDL print job data according to an instruction from the job control server 630 (along a path indicated by an arrow i in FIG. 6).

The job control print service 622 transmits the PDL file to a printer, or retransmits print job data transmitted once to another printer. In FIG. 6, the arrows g, h; i indicate the route of the print job data in such a case.

A description will now be given of processing performed in the case where a port of a printer (an IP address or interface port) is set as a destination port for a PDL driver. This processing is performed through a conventional printer driver.

In FIG. 6, the PDL driver 602 generates a PDL file interpretable by the printer 650 according to a sequence of drawing commands generated by the application 601. The PDL file is transmitted from the Windows (registered trademark) spooler 604 to the printer 650 (along a path indicated by an arrow k in FIG. 6) via the job control port monitor 690 (along a path indicated by an arrow j in FIG. 6).

The system of printing (indicated by the arrow j in FIG. 6) using the Windows (registered trademark) job control port monitor 690 means a system in which printing is performed by a print system of an ordinary OS such as Windows (registered trademark) but alternate printing or the like is not performed.

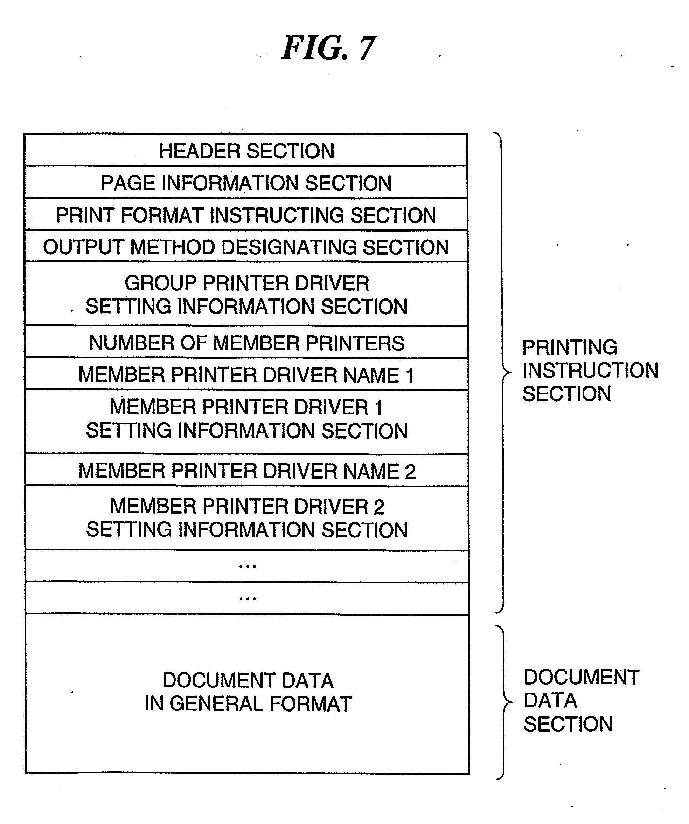

FIG. 7 shows an example of the structure of the general print file.

As shown in FIG. 7, the general print file used in the present embodiment is comprised of a printing instruction section (or referred to as "job ticket section") and a document data section.

Document information and printing instructions are described in the printing instruction section. The document data section stores document data obtained by converting data outputted from an application into data in a general format which does not depend on the printer language.

The printing instruction section is comprised of a header section, a page information section, a print format instructing section, an output method designating section, a group printer driver setting information section, a number-of-member printers section, a member printer driver name section, a member printer driver setting information section, and so forth.

The header section stores information such as information indicative of the version of the file, file information, and so forth. The page information section stores information indicative of the number of pages of document data included in the document data section, the size of each page, and so forth. The print format instructing section stores output format information indicative of pages to be printed, number of copies, document data imposition (such as N-UP and bookbinding), a spooling instruction, a punching instruction, and so forth.

The output method designating section stores information indicative of an output method such as distributed printing, color/black-and-white distributed printing, alternate printing, and broadcast printing. The group printer driver setting information section stores information indicative of UI settings relating to a group printer driver, described later. The number-of-printers section stores information indicative of the number of member printers with which the group printer driver is associated.

The member printer driver name stores printer driver names of member printer drivers, and the member printer driver setting information section stores information indicative of driver UI settings relating to member printers, such as DEVMODE (print setting information), for example. Printer driver names of member printers in a processing system where a print job is outputted from the group printer driver 603 to the job control port monitor 621 are described in the member printer driver name section, but printer driver names of member printers in a processing system where a print job is outputted from the PDL driver 602 to the job control port monitor 621 are not described. This is because member printers can be assigned via a user interface of the group printer 603.

The member printer driver name section and the member printer driver setting information section are provided with storage areas corresponding in number to the number of member printers stored in the number-of-member printers section.

The group printer driver 603 records settings made on a GUI, not shown, corresponding to the group printer driver 603 into the printing instruction section when generating a general print file. Further, the group printer driver 603 converts drawing commands (DDI function) received from a GDI as the drawing function of the OS into general data, and records it as document data in the document data section of the general print file.

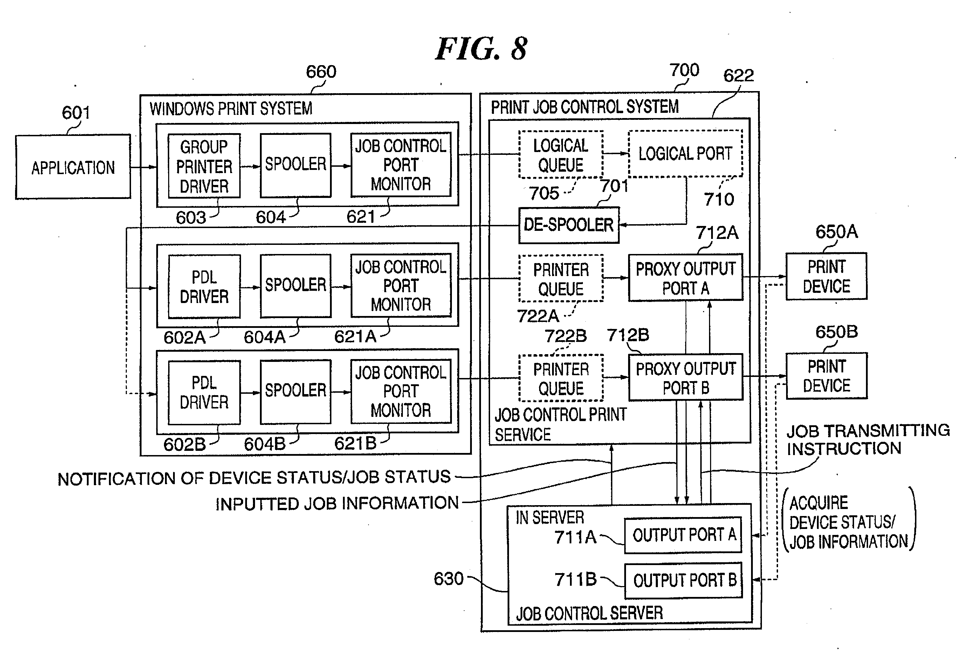

Referring to FIG. 8, a detailed description will now be given of the relationship relationship in print job processing between a print system provided by Windows (registered trademark) and the print job control system, as well as the outline of processing. A processing system appearing in FIG. 8 is related to printing processing through the group printer driver 603.

In FIG. 8, in the print job control system 700, a plurality of physical devices on which control programs for the print server 101 and the clients 102 to 104 operate are involved. An output port 711 (711A and 711B) managed by the print server 101 is associated with a proxy output port 712 (712A and 712B) of the client job control print service 622 of each of the clients so that all of the associated proxy output ports of the client can be collectively managed.

In the present embodiment, actual print job data is held in the proxy output port 712 of each client. The job control server 630 does not transmit the print job data itself, but only instructs the job control print service 622 to transmit the print job data. In accordance with the instruction, the client job control print service 622 transmits the print job data to the printer 650.

A description will now be given of processing carried out in the case where the print job control system 700 performs value-added printing such as alternate printing, distributed printing, and broadcast printing.

When the print job control system 700 performs value-added printing such as alternate printing, distributed printing, and broadcast printing, the user or the application 601 needs to issue a print job to a printer assigned to output data from the group printer driver 603, as described before. Alternatively, as described later, the job control port monitor 621 is set as the destination of data outputted from the PDL driver 602, the user or the application 601 may issue a print job to the PDL driver 602.

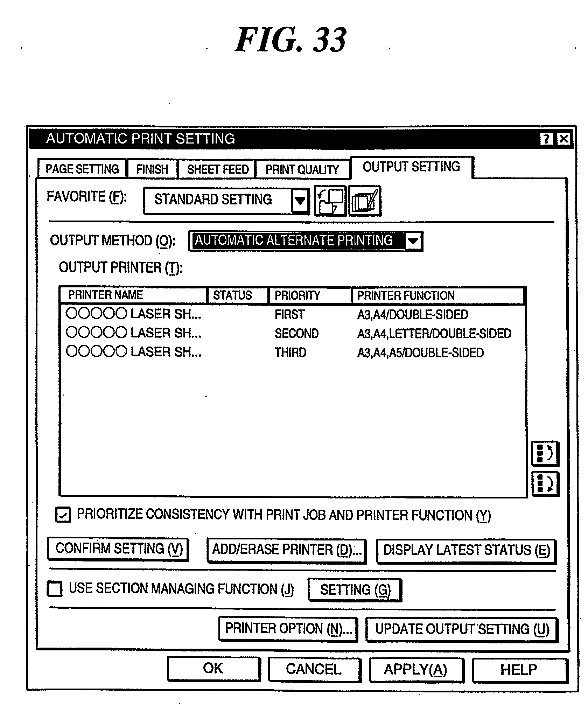

When the application 601 starts printing processing, the group printer driver 603 acquires logical queue information, described later, on the job control print service 622, and sets information as shown in FIG. 33, which can be referred to as print properties, in a general print file. FIG. 33 shows an example of a user interface screen for setting print properties in a logical queue (logical printer management) 705. It is assumed here that automatic alternate processing can be selected as an output method, and output printers (member printer drivers) can be registered with priorities being allotted thereto.

The job control print service 622 receives print job data, as a general print file, processed by the group printer driver 603 via the job control port monitor 621. Upon receiving the print job data, the job control print service 622 issues a job (member job) to another printer set as an output printer for a PDL driver via a de-spooler 701 so that the printer can perform printing on the job.

The de-spooler 701 generates and outputs drawing commands (GDI function) via the drawing function of the OS based on document data of the general print file as print job data as is the case with an ordinary application, and a PDL driver 602A receives the drawing commands (DDI function).

On this occasion, the de-spooler 701 interprets the print instructing section (job ticket section) of the general print file described above with reference to FIG. 7, performs processing on document data stored in the document data section to convert it into Windows (registered trademark) GDI data, and gives a printing instruction to each printer driver to issue a print job.

For example, assuming that an instruction indicative of "2-UP" is recorded in the print format instructing section, document data of two pages are reduced and laid out on one sheet. In distributed printing or broadcast printing, the de-spooler 701 issues a job to a plurality of member printer drivers described in the print instructing section according to distributed printing or broadcast printing settings. In alternate printing, if alternate printing conditions are satisfied, the de-spooler 701 issues a member job according to settings made in advance in the case of automatic alternate printing, and issues a member job according to operation by the user in the case of manual alternate printing.

Further, it may also be assumed that instruction information corresponding to each member driver is extracted from the print instructing section by a module other than the de-spooler 701, so that the de-spooler 701 interprets printing instructions given to the extracted each member printer driver.

Further, when issuing a print job to each member printer driver, the de-spooler 701 needs to create print setting information DEVMODE as printing instructions for each member printer, and the de-spooler 701 appropriately reflects the contents of the printing instruction section on the print setting information DEVMODE. Although in the present embodiment, it is assumed that the print system is based on Windows 2000 or Windows XP developed by Microsoft in the U.S., and the print setting information DEVMODE as a structure capable of being controlled by a printer driver is used as print setting information, the print setting information is not limited to DEVMODE, but it may be an XML file in which print setting information is described. Namely, the way of transferring print setting information is not limited to one, but differs according to the type of the OS used.

The job control print service 622 on the client 600 receives PDL data of each member job generated by the PDL driver 602 via the job control port monitor 621, gives information relating to the received PDL print job data to the print server 101, and temporarily holds the print job data in the proxy output port 712A or 712B thereof.

After the job control print service 622 is instructed to transmit the print job data by the job control server 630, the print job control system 700 transmits the PDL print data to the printer 650 via the proxy output port 712.

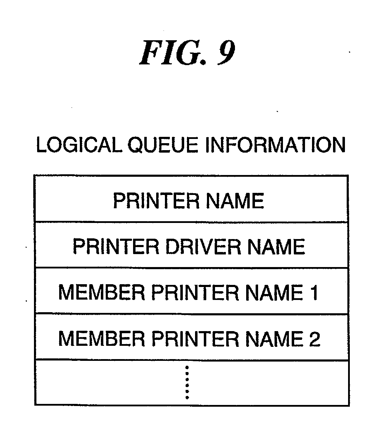

FIG. 9 shows logical queue information set in the logical queue 705.

The logical queue information is referred to in the case where automatic alternate printing is performed, and includes information indicative of alternate printers, priorities thereof, and so forth.

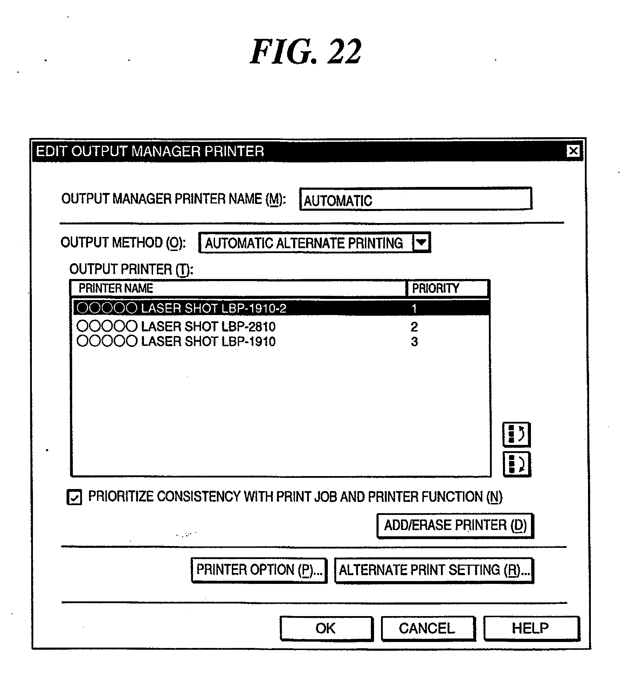

FIGS. 22 to 24 show examples of user interface screen for setting logical queue information in the logical queue 705.

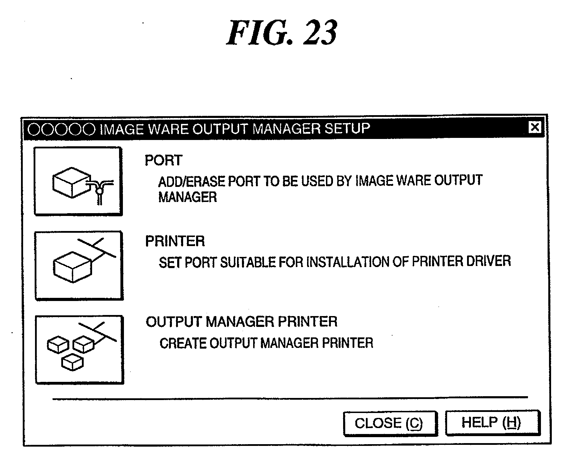

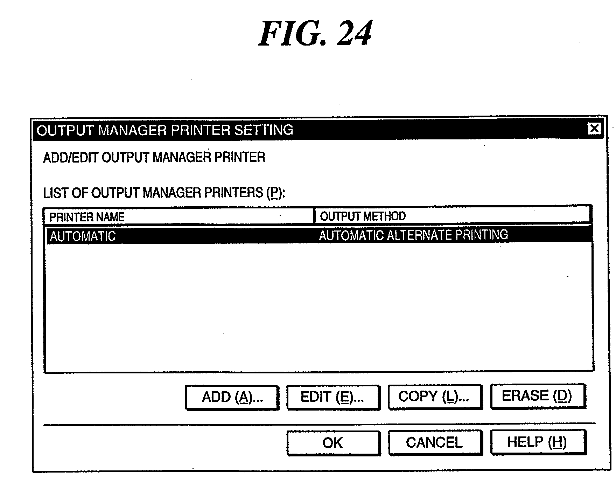

Upon selection of a logical queue (in FIG. 23, an output manager printer) via the user interface screen of the print job control system 700 in FIG. 23, the user interface screen shown in FIG. 24 is displayed. On the user interface screen in FIG. 24, it is possible to add, edit, copy, and erase a logical queue for the group printer driver 603.

Depressing an "Add" button on the user interface screen in FIG. 24 enables a new logical queue to be added by selecting one or more member printers managed by the group printer driver 603. Further, selecting a logical queue created in advance and depressing an "Edit" button on the user interface screen in FIG. 24 causes the user interface screen in FIG. 22 to be displayed so that settings of the logical queue can be edited. Specifically, it is possible to set alternate member printers for the logical queue 705 of the group printer driver 603 and allot priorities to the alternate member printers. The logical queue information set on the user interface screen is managed by the logical queue 705.

Further, on the user interface screen in FIG. 22, each member printer to be used by the group printer driver 603 can be set in accordance with an instruction from the user. Since the group printer driver 603 outputs a general file as described above, it is capable of setting output printers irrespective of the types thereof, and therefore, is capable of freely adding member printers. For example, printers listed as output printers in FIG. 22 may be different from each other in either PDL format or type.

Further, on the user interface screen in FIG. 22, "automatic alternate printing" can be set as an output method. In the case where an automatic alternate printing mode is set, alternate printers are successively determined according to the priorities of member printers listed as output printers. The priorities of member printers may also be freely set via the user interface screen in FIG. 22. Group printer setting values (hereinafter referred to as "the logical queue information") set via the user interface screen in FIG. 22 are stored in the HD 205, and managed by the print job control system 700.

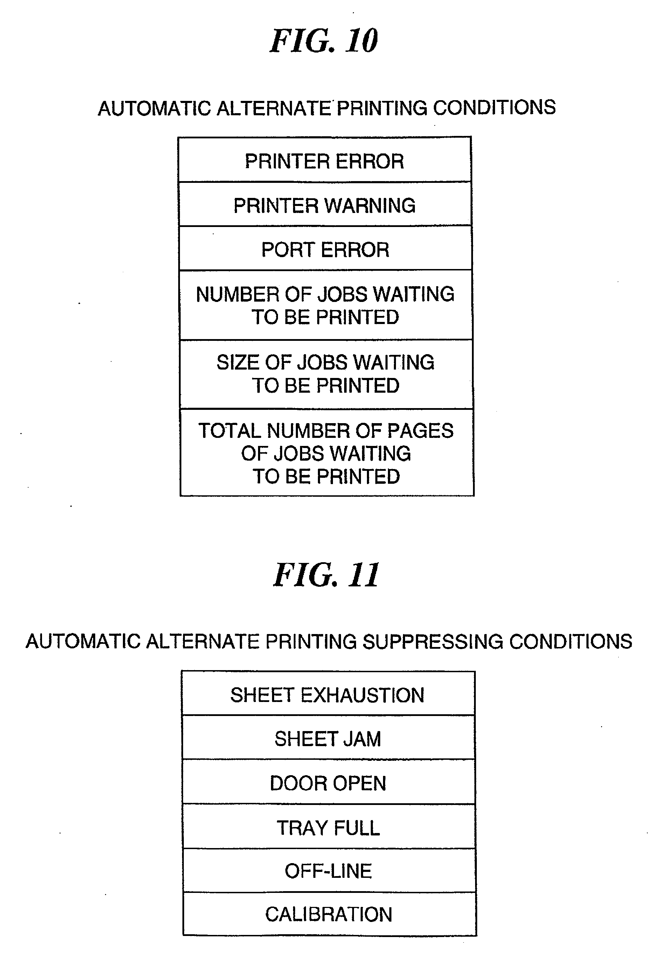

FIG. 10 shows automatic alternate printing conditions set in the logical queue 705 having an automatic alternate printing function. The automatic alternate printing conditions are set as information on a print job received by the logical queue 705, and are intended to determine whether alternate printing is to be performed or not when an error such as "sheet exhaustion" occurs in a printer which performs printing.

The way of setting the automatic alternate printing conditions as well as the way of setting automatic alternate printing suppressing conditions will be described later, and only the contents of the automatic alternate printing conditions will be described herein.

A description will now be given a printer error, a printer warning, a port error, the number of jobs waiting to be printed, the size of jobs waiting to be printed, and the total number of pages of jobs waiting to be printed, which are set as the automatic alternate printing conditions.

If a printer error is set as an automatic alternate printing cognition, when a device (printer) error such as "sheet exhaustion" occurs in a printer which performs printing, automatic alternate printing is performed such that print job data is printed by a different printer.

If a printer (device) warning is set as an automatic alternate printing condition, when a device warning indicative of toner shortage occurs, automatic alternate printing is performed such that print job data is printed by a different printer.

If a port error is set as an automatic alternate printing condition, when an error occurs in the proxy output port 712A or 712B corresponding to a printer which performs printing, automatic alternate printing is performed such that print job data is printed by a different printer.

The number of jobs waiting to be printed means the number of print jobs waiting to be outputted from a device. If the number of jobs waiting to be printed is set as an automatic alternate printing condition, when the number of jobs waiting to be printed exceeds the set number of jobs, automatic alternate printing is performed such that print job data is printed by a different printer.

The size of jobs waiting to be printed means the total size of print jobs waiting to be outputted from a device. If the size of jobs waiting to be printed is set as an automatic alternate printing condition, when the total size of jobs waiting to be printed exceeds the set job size, automatic alternate printing is performed such that print job data is printed by a different printer.

The total number of pages waiting to be printed means the total number of jobs waiting to be outputted from a device. If the total number of pages of jobs waiting to be printed is set as an automatic alternate printing condition, when the total number of pages of jobs waiting to be printed exceeds the set number of pages, automatic alternate printing is performed such that print job data is printed by a different printer.

Note that the above described conditions may be set in plurality at the same time.

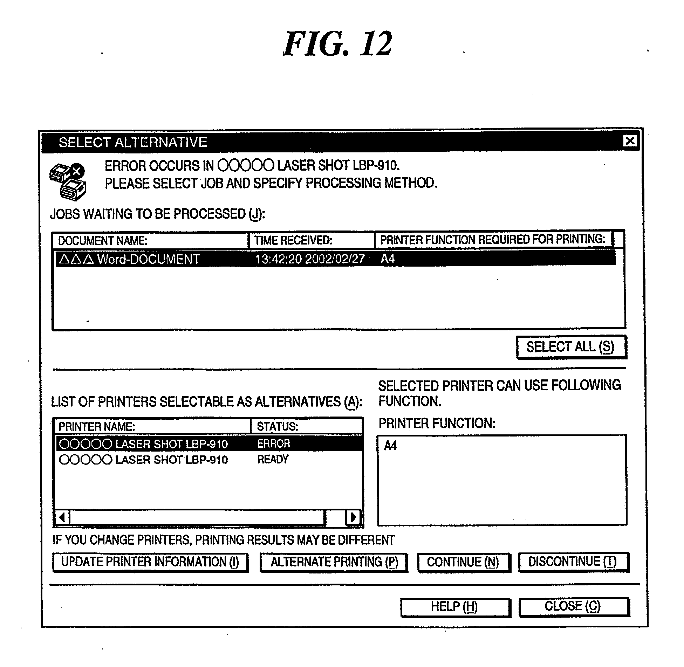

FIG. 11 shows automatic alternate printing suppressing conditions set in the logical queue 705 having the alternate printing function. If the automatic alternate printing suppressing conditions are satisfied, a transition is made to manual alternate printing which enables the user to determine whether alternate printing is to be performed or not without performing automatic alternate printing. Thus, in the present embodiment, the automatic alternate printing suppressing conditions mean manual alternate printing conditions. First, a description will be given the way of setting automatic alternate printing conditions.

FIGS. 23 to 26 show user interface screens for setting automatic alternate printing conditions in the logical queue 705.

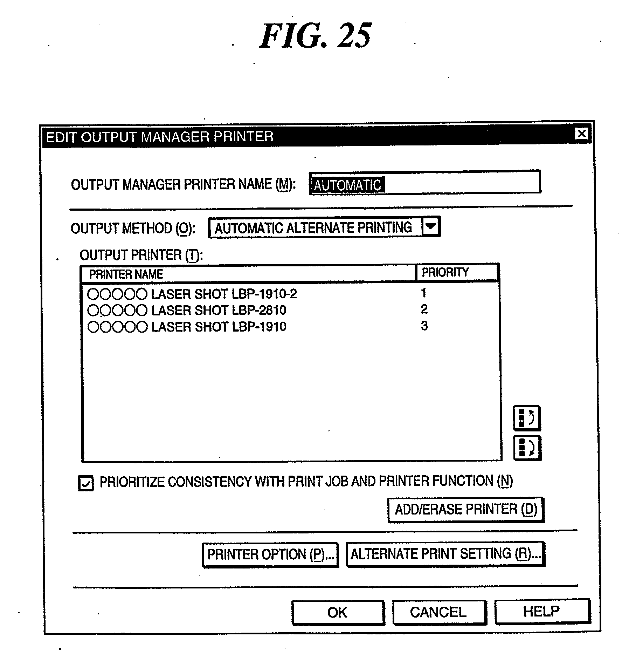

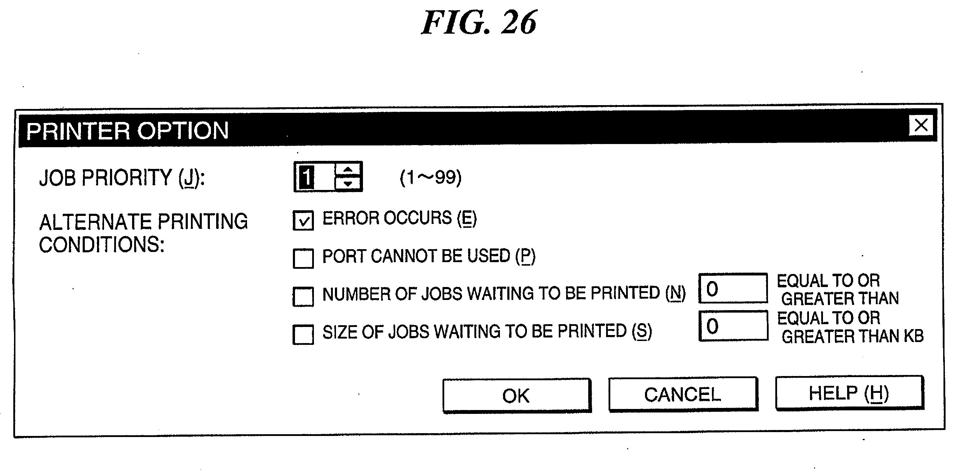

Upon selection of a logical queue (in FIG. 23, an output manager printer) for the group printer driver 603 via the user interface screen in FIG. 23, the user interface screen in FIG. 24 is displayed as described above to show a list of logical queues. If the user selects a logical queue for setting automatic alternate conditions as an output method and depresses the "Edit" button in FIG. 24, the user interface screen in FIG. 25 is displayed. To set automatic alternate printing conditions, a printer option button (automatic alternate printing condition setting means) on the user interface screen in FIG. 25 is depressed to display the user interface screen in FIG. 26, and check boxes corresponding to the respective conditions are checked.

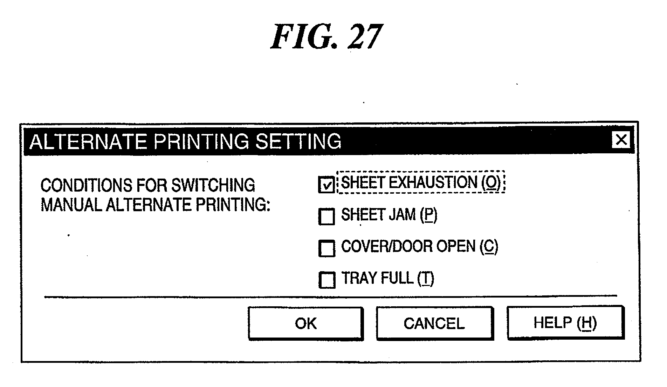

The automatic alternate printing conditions set via the user interface screen in FIG. 26 are set in the selected logical queue 705 and managed by the logical queue 705. FIG. 27 shows a user interface screen displayed in the case where the automatic alternate printing mode is selected as a print method. In the automatic alternate printing mode, automatic alternate printing suppressing conditions (manual alternate printing conditions) can be set for the logical queue 705 via the user interface screen in FIG. 27. The automatic alternate printing suppressing conditions are set for the logical queue, but not set individually for respective member printers.

To set automatic alternate printing suppressing conditions, an alternate printing setting button (manual alternate printing condition setting means) on the user interface screen in FIG. 25 is depressed to display the user interface screen in FIG. 27, and check boxes corresponding to the respective conditions are checked. The automatic alternate printing conditions set via the user interface screen in FIG. 27 are set in the selected logical queue 705 and managed by the logical queue 705.

The automatic alternate printing suppressing conditions are set as information on a print job received by the logical queue 705, and are intended to manually perform alternate printing without automatically performing alternate printing when an error set as an alternate printing condition occurs in a printer as described above.

A description will now be given of "sheet exhaustion", "sheet jam", "door open", "tray full", "off-line", and "calibration", which are set as the automatic alternate printing suppressing conditions.

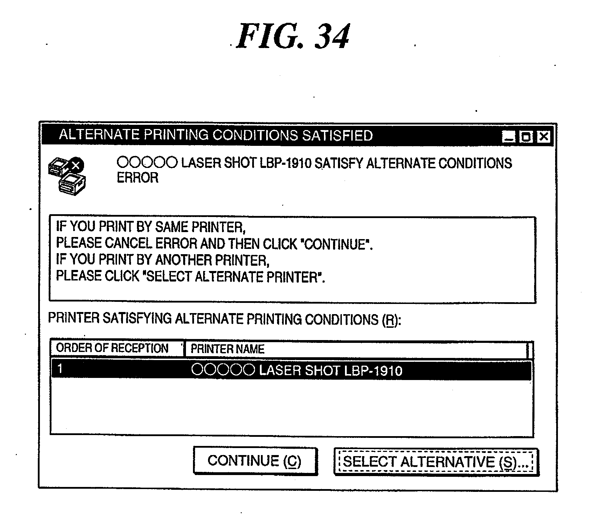

If "sheet exhaustion" is set as an automatic alternate printing suppressing condition, when the job control print service 622 recognizes the occurrence of a device error such as "sheet exhaustion" in a printer which performs printing, automatic alternate printing is not performed, but the job control print service 622 displays a POP-UP dialogue indicative of occurrence of the alternate printing condition as shown in FIG. 34 on the display 207. Whether alternate processing is to be performed or not or whether printing is to be continued as it is or not can be determined on the POP-UP dialogue.

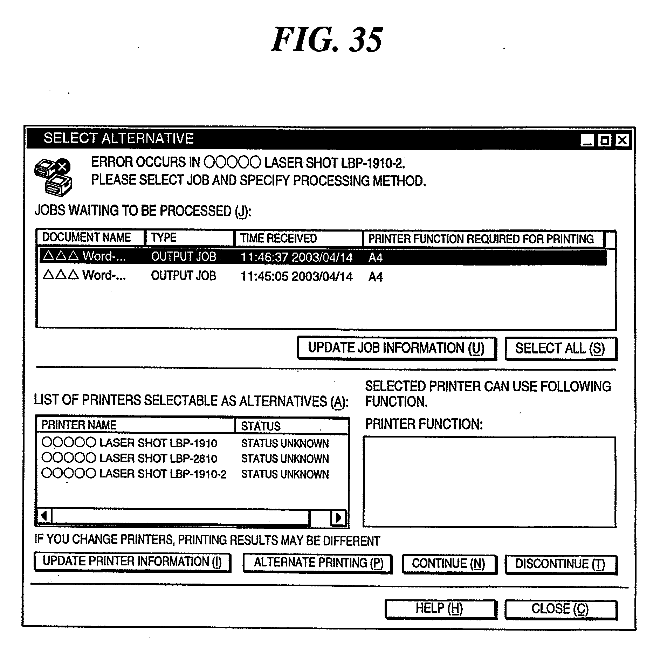

When manual alternate printing is designated by depressing a selection button for an alternate printer on the POP-UP dialogue in FIG. 34, a manual alternate printing POP-UP dialogue shown in FIG. 35 is displayed. On the POP-UP dialogue in FIG. 35, the user can select an alternate printer for a job, determine pages subjected to alternate printing and the number of copies, erase a job, and make a determination as to, for example, whether printing is to be continued as it is or not.

On the manual alternate printing POP-UP dialogue in FIG. 35, the user can select an alternate printer for a printed job, determine pages subjected to alternate printing and the number of copies, erase a job, and make a determination as to, for example, whether printing is continued as it is or not. Further, since automatic alternate printing is performed using a general print file, devices with different PDL formats can be selected from alternate printers as shown in FIG. 35.

In the case where "sheet jam" is set as an automatic alternate printing suppressing condition, when a device error such as "sheet jam" in a printer which performs printing, the job control print service 622 displays the POP-UP dialogue indicative of the occurrence of alternate printing conditions as shown in FIG. 34 without performing automatic alternate printing as described above. Whether alternate processing is to be performed on the printed job or not or whether printing is to be continued as it is or not can be determined on the POP-UP dialogue in FIG. 34. If it is determined that alternate processing is to be performed, the manual alternate printing POP-UP dialogue is displayed as shown in FIG. 35 so that the user can select an alternate printer for the printed job, determine pages subjected to alternate printing and the number of copies, erase a job, and make a determination as to, for example, whether printing is to be continued as it is or not.

In the case where "door open" is set as an automatic alternate printing suppressing conditions, when a device error such as "door open" in a printer which performs printing, the job control print service 622 displays the POP-UP dialogue indicative of the occurrence of alternate printing conditions as shown in FIG. 34 without performing automatic alternate printing as described above. Whether alternate processing is to be performed on the printed job or not or whether printing is to be continued as it is or not can be determined on the POP-UP dialogue in FIG. 34. If it is determined that alternate processing is to be performed, the manual alternate printing POP-UP dialogue is displayed as shown in FIG. 35 so that the user can select an alternate printer for a printed job, determine pages subjected to alternate printing and the number of copies, erase a job, and make a determination as to, for example, whether printing is to be continued as it is or not.

In the case where "tray full" is set as an automatic alternate printing suppressing condition, when a device error such as "tray full" in a printer which performs printing, the job control print service 622 displays the POP-UP dialogue indicative of the occurrence of alternate printing conditions as shown in FIG. 34 without performing automatic alternate printing as described above. Whether alternate processing is to be performed on the printed job or not or whether printing is to be continued as it is or not can be determined on the POP-UP dialogue in FIG. 34. If it is determined that alternate processing is to be performed, the manual alternate printing POP-UP dialogue is displayed as shown in FIG. 35 so that the user can select an alternate printer for a printed job, determine pages subjected to alternate printing and the number of copies, erase a job, and make a determination as to, for example, whether printing is to be continued as it is or not.

In the case where "off-line" is set as an automatic alternate printing suppressing condition, when a device error such as "off-line" in a printer which performs printing, the job control print service 622 displays the POP-UP dialogue indicative of the occurrence of alternate printing conditions as shown in FIG. 34 without performing automatic alternate printing as described above. Whether alternate processing is to be performed on the printed job or not or whether printing is to be continued as it is or not can be determined on the POP-UP dialogue in FIG. 34. If it is determined that alternate processing is to be performed, the manual alternate printing POP-UP dialogue is displayed as shown in FIG. 35 so that the user can select an alternate printer for a printed job, determine pages subjected to alternate printing and the number of copies, erase a job, and make a determination as to, for example, whether printing is to be continued as it is or not.

In the case where "calibration" is set as an automatic alternate printing suppressing condition, if a device error such as "calibration"- in a printer which performs printing, the job control print service 622 displays the POP-UP dialogue indicative of the occurrence of alternate printing conditions as shown in FIG. 34 without performing automatic alternate printing as described above. Whether alternate processing is to be performed on the printed job or not or whether printing is to be continued as it is or not can be determined on the POP-UP dialogue in FIG. 34. If it is determined that alternate processing is to be performed, the manual alternate printing POP-UP dialogue is displayed as shown in FIG. 35 so that the user can select an alternate printer for a printed job, determine pages subjected to alternate printing and the number of copies, erase a job, and make a determination as to, for example, whether printing is to be continued as it is or not.

The above described conditions may be set in plurality at the same time.

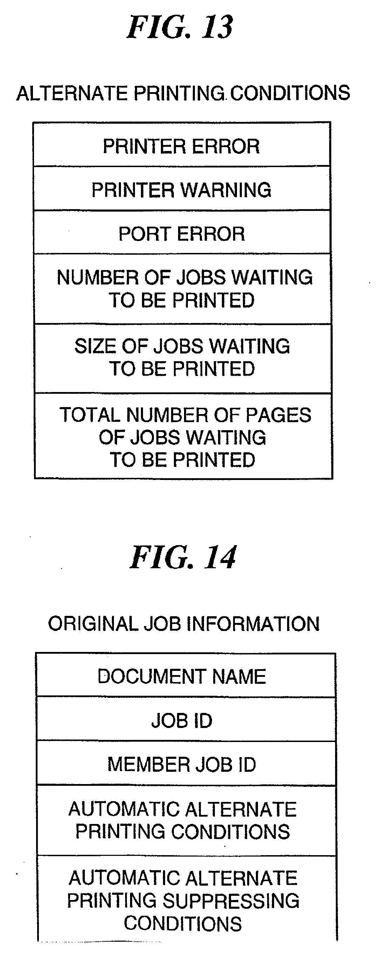

FIG. 13 shows alternate printing conditions set in printer queues (physical printer management) 722A and 772B (hereinafter collectively referred to as "the printer queue 722" unless otherwise specified) each having an alternate printing function. In the present embodiment, it is assumed that in the case of alternate processing on a print job inputted from the PDL driver 602, automatic alternate printing is not performed but manual alternate printing is performed. Therefore, the following description assumes that the alternate printing conditions in FIG. 13 are manual alternate printing conditions, but the present invention is not limited to this insofar as the alternate printing conditions are set in the printer queue 722. For example, such alternate printing conditions as shown in FIG. 13 may be used as alternate printing conditions under which alternate priming is automatically performed.

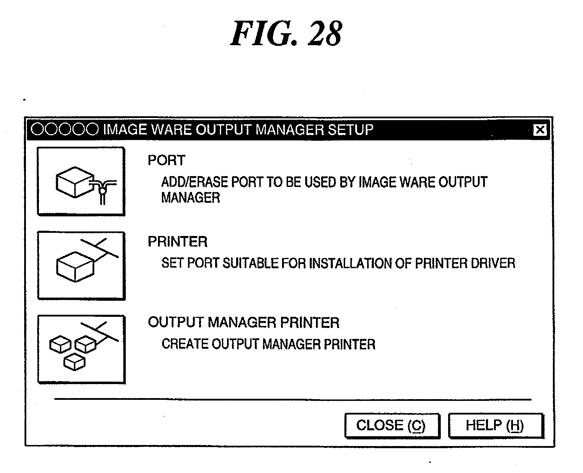

FIGS. 28 to 31 show user interface screens for setting manual alternate printing conditions in the printer queue 722. In the case where the job control port monitor 621 is set as the destination of print data outputted from the PDL driver 602, the print job control system according to the present embodiment (including the job control port monitor 621, the job control print service 622, and the print manager 623) manages PDL print data inputted from the PDL driver 602, and when an error occurs in the printer 650, alternate printing is performed on the print data. Thus, settings for performing alternate printing on a print job inputted form the PDL driver 602 as described above are equivalent to printer queue setting information.

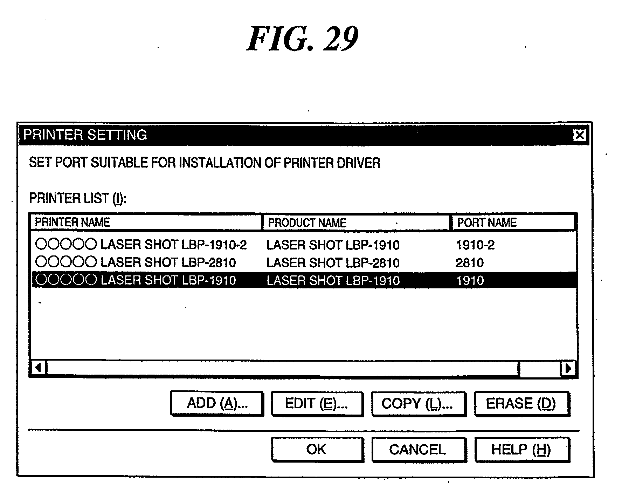

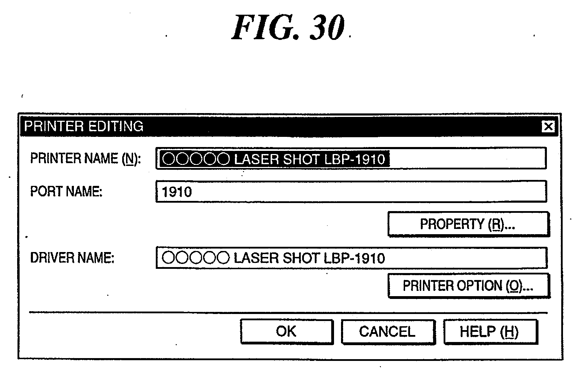

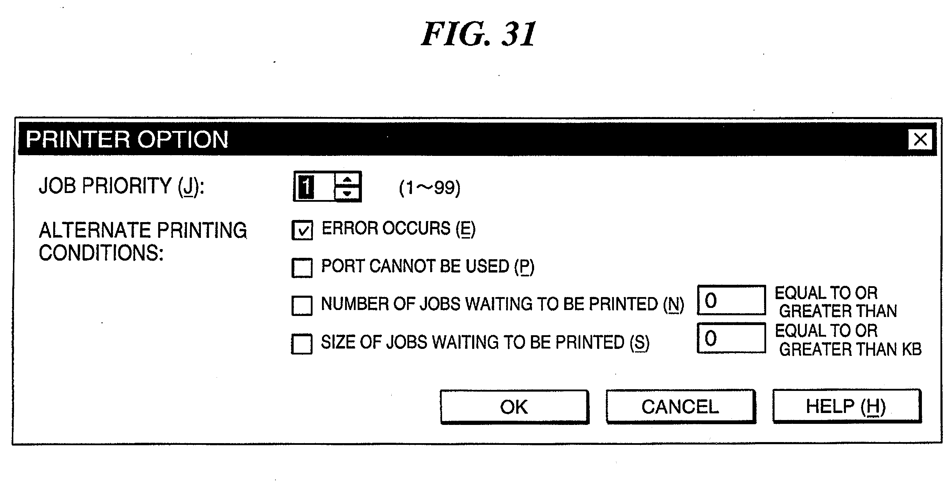

Upon selection of a printer queue via the user interface screen in FIG. 28, the user interface screen in FIG. 29 is displayed so as to set a port suitable for installation of a printer driver. A list of printer queues for a PDL driver which are set as destination ports for the PDL driver in the print job control system 700 is displayed on the user interface screen in FIG. 29. By depressing an "Edit" button in a state in which one printer has been selected from the list of printer queues, the user interface screen in FIG. 30 is displayed. The printer name, port name, and printer driver name corresponding to the selected printer queue are displayed on the user interface screen in FIG. 30. By depressing a printer option button (manual alternate printing setting means) in FIG. 30, the manual alternate printing conditions are set via the user interface screen in FIG. 31 displayed. Namely, the manual alternate printing conditions can be set for each printer queue. On the user interface screen in FIG. 31, it is possible to set a plurality of kinds of manual alternate printing conditions as is the case with alternate printing conditions set in a logical queue.

The manual alternate printing conditions set on this occasion are set in the selected printer queue 722, stored in the HD 205, and managed by each printer queue 722.

The manual alternate printing conditions are set as information on a print job received by the printer queues 722A and 722B, and are intended to cause the user to determine subsequent printing processing in the case where the manual alternate printing POP-UP dialogue as shown in FIG. 12 is displayed when an error such as "sheet exhaustion" occurs in a printer which performs printing.

A description will now be given of a printer error, a printer warning, a port error, the number of jobs waiting to be printed, the size of jobs waiting to be printed, and the total number of pages of jobs waiting to be printed, which are set as the alternate printing conditions in FIG. 13.

In the case where a printer error is set as an manual alternate printing cognition in FIG. 31, when a device (printer) error such as "sheet exhaustion" occurs in a printer which performs printing, the manual alternate printing POP-UP dialogue as shown in FIG. 12 is displayed to start processing for causing the user to determine subsequent printing processing. Since a print job is subjected to manual alternate printing using a PDL print data file depending on the type of a device or the like, printers with the same PDL format are automatically extracted from print queues registered in the print job control system so that the user can select an alternate printer from the extracted printers. Although it is assumed here that the printers with the same PDL format are extracted, the present invention is not limited to this, but it is possible to extract only printers of the same type. The reason for this is that, although it is possible to interpret a PDL file if devices have the same PDL format, alternate printing may be impossible due to a difference in the sheet size, printable range, and so forth between the devices.

In the case where a printer (device) warning is set as a manual alternate printing condition in FIG. 31, when a device warning such as toner shortage occurs, the job control print service 622 recognizes the occurrence of the error, and the manual alternate printing POP-UP dialogue as shown in FIG. 12 is displayed to cause the user to determine subsequent printing processing.

In the case where a port error is set as an automatic alternate printing condition in FIG. 31, when an error occurs in the proxy output port 712A or 712B corresponding to a printer which performs printing, the job control print service 622 recognizes that it is impossible to use the proxy port 712, and the manual alternate printing POP-UP dialogue as shown in FIG. 12 is displayed to cause the user to determine subsequent printing processing.

The number of jobs waiting to be printed means the number of print jobs waiting to be outputted from a device. In the case where the number of jobs waiting to be printed is set as a manual alternate printing condition in FIG. 31, when the number of jobs waiting to be printed exceeds the set number of job, the job control print service 622 determines that the number of jobs waiting to be printed is equal to or greater than the set number of jobs, and the manual alternate printing POP-UP dialogue as shown in FIG. 12 is displayed to cause the user to determine subsequent printing processing.

The size of jobs waiting to be printed means the total size of print jobs waiting to be outputted from a device. In the case where the size of jobs waiting to be printed is set as a manual alternate printing condition in FIG. 31, when the total size of jobs to be printed exceeds the set job size, the job control print service 622 determines that the size of jobs waiting to be printed is equal to or greater than the set size, and the manual alternate printing POP-UP dialogue as shown in FIG. 12 is displayed to cause the user to determine subsequent printing processing.

The total number of pages waiting to be printed means the total number of jobs waiting to be outputted from a device. If the total number of pages of jobs waiting to be printed is set as a manual alternate printing condition in FIG. 31, when the total number of pages of jobs waiting to be printed exceeds the set number of pages, the job control print service 622 determines that the size of jobs waiting to be printed is equal to or greater than the set size, and the manual alternate printing POP-UP dialogue as shown in FIG. 12 is displayed to cause the user to determine subsequent printing processing.

It should be noted that the above described conditions may be set in plurality at the same time.

The automatic alternate printing conditions and the automatic alternate printing suppressing conditions set in the logical queue 705 and the manual alternate printing conditions set in the printer queue 722 as described above are set for management of each printer, but as described later, if a print job is issued, the conditions are set in association with the print job, and thereafter, the job control print service 622 determines whether alternate processing is to be performed or not according to the alternate printing conditions associated with each print job. This will be described later in further detail.

FIG. 14 shows job information on an original job (hereinafter referred to as "the original job information").

The original job information is created by the print job control system 700 when a print job (i.e., an original job) for which the user selects the group printer driver 603 and gives a printing instruction is transferred to the logical queue 705. The job information includes the document name, job ID, member job ID, automatic alternate printing conditions, automatic alternate printing suppressing conditions and so firth relating to the print job.

The document name is a document name of an original job printed by the user, the job ID is a job identifier allotted to each job by the system, and the member job ID is created based on the original job and is a job identifier of a job transferred to the printer queues 722A and 722B, the automatic alternate printing conditions are information about automatic alternate printing conditions set for a job received by the logical queue 705 and set in the logical queue 705, and the automatic alternate printing suppressing conditions are information about automatic alternate printing suppressing conditions set for a job received by the logical queue 705 and set in the logical queue 705. Although the automatic alternate printing suppressing conditions can be set for each logical queue, it is assumed in the present embodiment that the manual alternate printing conditions set in the logical queue 705 in the automatic alternate printing mode are read out and set.

As described above, when a print job of a general print file from the group printer driver 603 is inputted from the job control port monitor 621 to the job control print service 622, the automatic alternate printing conditions and the automatic alternate printing suppressing conditions are-read out from the logical queue 705, and set as the original job information, and hence the respective alternate printing conditions are managed in association with the original job.

In printing processing, the job control print service 622 outputs drawing instructions to the PDL driver 602 based on a general print file, and the resulting PDL file is inputted to the job control print service 622 via the job control port monitor 621. The alternate printing conditions associated in advance with the original job are passed to the PDL file, and hence such automatic alternate printing conditions as occurrence of an error in a printer with a high priority are satisfied, and after alternate printing occurs, the automatic alternate printing conditions and the manual alternate printing conditions for a print job subjected to alternate printing are used without being changed, so that it is determined whether alternate printing is to be performed or not according to the same alternate printing conditions by the alternate printer.

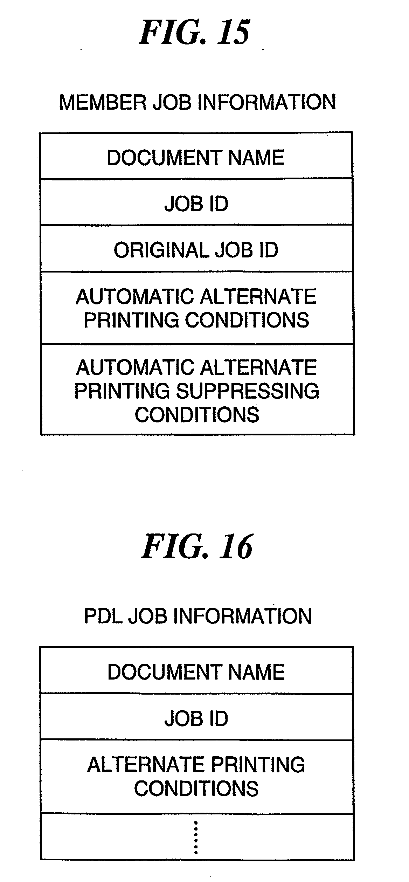

FIG. 15 shows job information on a member job.

The member job is a print job of each output unit created based on an original job for which the user selects the group printer driver 603 and gives a printing instruction, and corresponds to a print job of a PDL file inputted to the job control service 622 via the job control port monitor 621 based on drawing instructions outputted from the job control print service 622 to the PDL driver 602.

The member job information is job information created when a member job is transferred to the printer queues 722A and 722B, and includes the document name, job ID, original job ID, automatic alternate printing conditions, and automatic alternate printing suppressing conditions, and so forth relating to the member job.

The document name is created based on a document name of an original job printed by the user, and is normally identical with that of the original job, or has a number assigned at the end thereof. The job ID is a job identifier assigned to each job by the system, the original job ID is a job identifier of an original job as a basis of a member job, the automatic alternate printing conditions are information about automatic alternate printing conditions set as part of the original job information, and the automatic alternate printing suppressing conditions are information about automatic alternate printing suppressing conditions set as part of the original job information.

As described above, the present invention is characterized by using the same automatic alternate printing conditions and automatic alternate printing suppressing conditions as part of original job information as the automatic alternate printing conditions and automatic alternate printing suppressing conditions as part of the member job information in FIG. 15.

FIG. 16 shows PDL job information.

A PDL job is a print job for which the user selects the PDL driver 602 for which the job control port monitor 621 is set as a destination port and gives a printing instruction, and job information on the PDL job is referred to as PDL job information. Specifically, the PDL job information is created when a print job printed by the user using his or her selected PDL driver is transferred to the printer queues 722A and 722B, and includes document name, job ID, alternate printing conditions, and so forth relating to the print job.

The document name is a document name of a print job printed by the user, the job ID is a job identifier allotted to each job by the system, the alternate printing suppressing conditions are information about alternate printing conditions (here, manual alternate printing conditions) set in the printer queues 722A and 722B for the PDL job received by the printer queue 722A and 722B as described with reference to FIGS. 28 to 31.

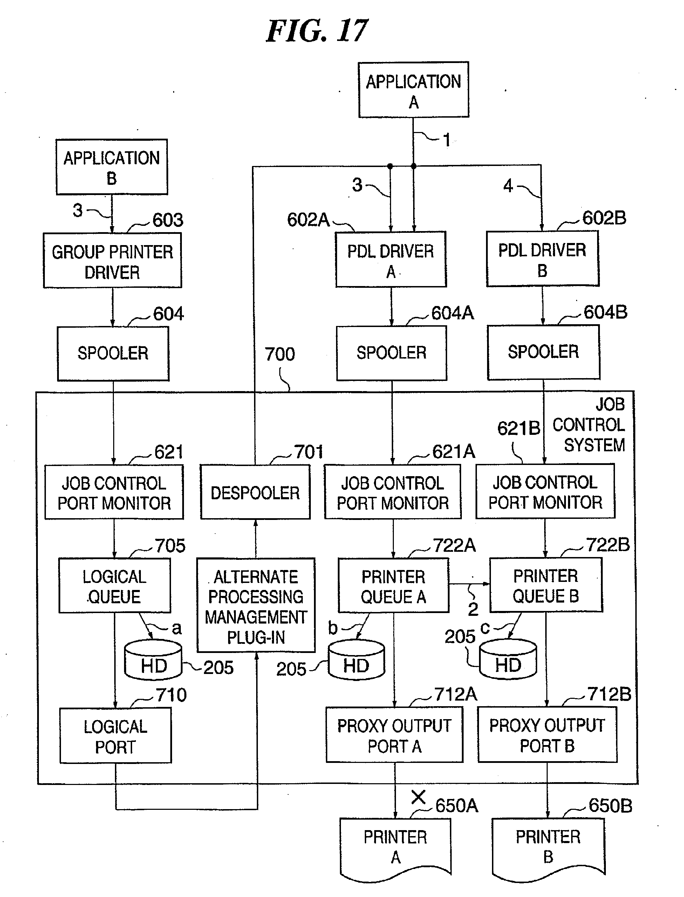

FIG. 17 is a diagram showing a flow of print data in an automatic alternate printing process and a manual alternate printing process.

In FIG. 17, reference numeral (1) denotes a flow of a print job for which an application A selects the PDL driver 602A for which the job control port monitor 621 is set as a destination port.

Reference numeral (2) in FIG. 17 denotes a flow of print data in the case where, if the job control print service 622 recognizes the occurrence of a device error before printing or during printing in the printer 650A corresponding to the PDL driver 602A selected in (1), the job control print service 622 determines whether the status of the recognized device satisfies alternate printing conditions (manual alternate printing conditions) or not, and if the alternate printing conditions are satisfied, a print job is shifted from the printer queue 722A to the printer queue 722B so that the printer 650B can perform alternate printing on the print job.

Reference numeral (3) in FIG. 7 denotes a flow of a print job for which an application B selects the group printer driver 603 and gives a printing instruction.

Reference numeral (4) in FIG. 7 denotes a flow of print data in the case where, if the job control print service 622 recognizes the occurrence of a device error before or while the printer 650 performs printing on a member job created by the PDL driver 602A based on a general print file generated by the group printer driver 603 selected in (3), the job control print service 622 determines whether the state of the recognized device satisfies automatic alternate printing conditions (manual alternate printing conditions) or not, and if the automatic alternate printing conditions are satisfied, print data created by a PDL driver B based on a general print file managed by the logical queue 705 is transmitted to the printer 650B so that the print can be can be printed again.

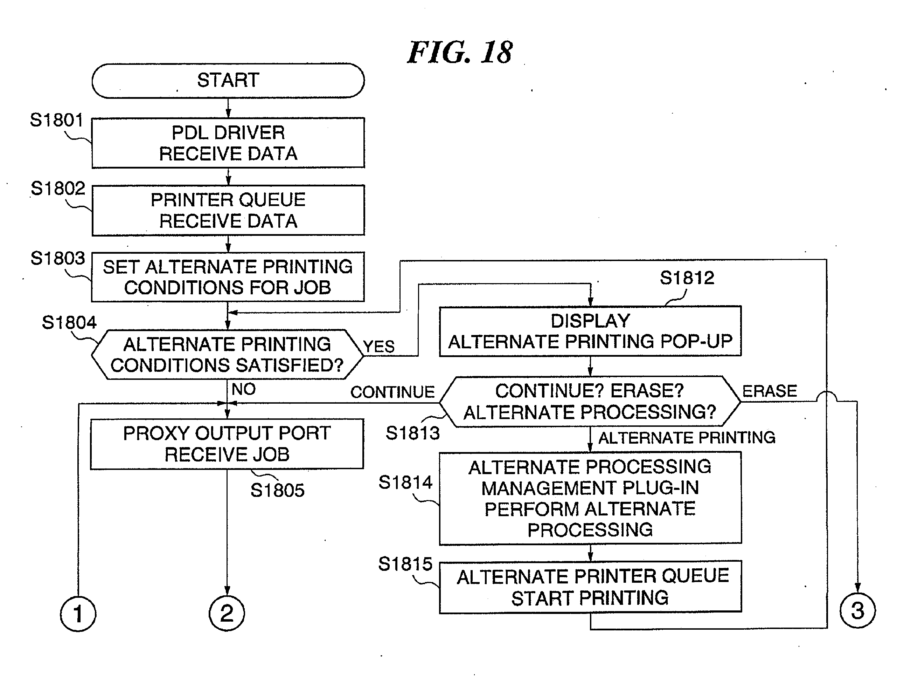

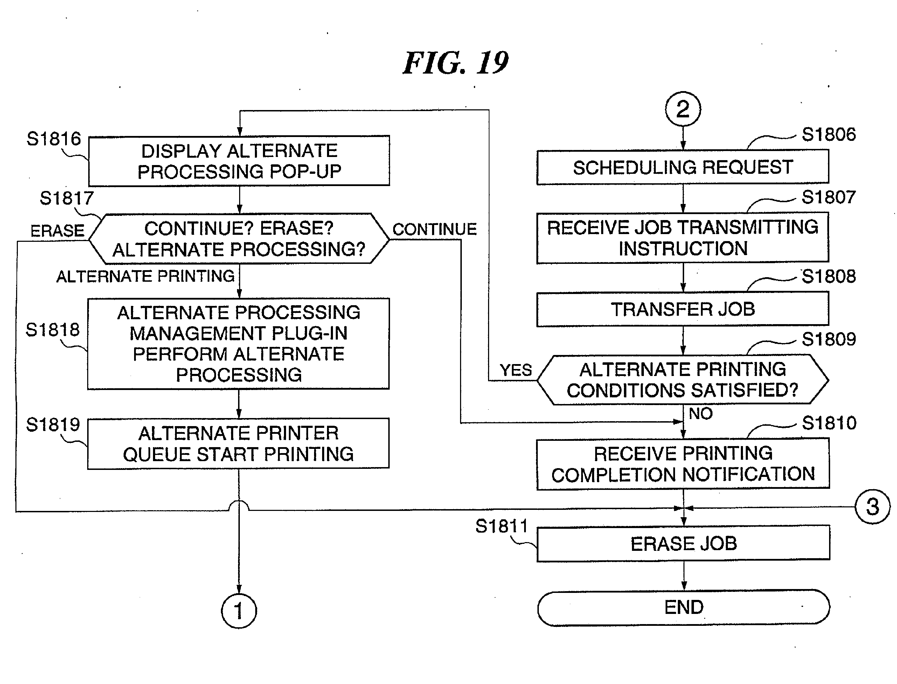

FIGS. 18 and 19 are flow charts showing alternate processing according to the present embodiment.

In alternate processing according to the present embodiment, alternate printing conditions regarding a printer (logical printer or physical printer) for which a printing instruction has been issued to perform printing by an application are reflected on a print job, and even in the case where alternate printing is performed, alternate printing is not performed based on alternate printing conditions regarding the alternate printer but is performed based on the alternate printing conditions reflected on the print job. Therefore, alternate printing can be performed on a print job even if alternate printing conditions for the alternate printer are different. This attains the first object of the present invention. It should be noted that the logical printer corresponds to a logical queue corresponding to a group printer driver, and the physical printer corresponds to a printer queue corresponding to a PDL driver. Referring to FIG. 18, a description will now be given of processing performed in the case where the application 601 instructs the PDL driver 602 to perform printing.

In a step S1801, the PDL driver 602 receives drawing commands (DDI function) from the application 601 via the drawing function of the OS, and in a step S1802, the PDL driver 602 creates PDL print job data (PDL file) based on the received drawing commands, and the generated PDL file is received by the printer queue 722A of the job control print service 622 via the Windows (registered trademark) print system 660.

In a step S1803, the job control print service 622 sets the alternate printing conditions in FIG. 13 (PDL alternate printing conditions that are the manual alternate printing conditions in the present embodiment) set for the printer queue 722A in the PDL job information in FIG. 16 on the print job received in the step 51802. In a step S1804, the job control print service 622 monitors the status of an output printer directly, or checks the status of the printer 650 monitored by the device information control module 631 of a server machine (server apparatus) via the job control server 630, thus determining whether the status of the monitored printer satisfies the alternate printing conditions in the PDL job information (FIG. 13) set for the print job.

For example, in the case where such an error as "sheet exhaustion" occurs in the printer, it is determined that the alternate printing conditions are satisfied if "printer error" is included in the alternate printing conditions, and it is determined that the alternate printing conditions are not satisfied if "printer error" is not included in the alternate printing conditions.

If it is determined in the step S1804 that the alternate printing conditions are not satisfied, the job control print service 622 instructs the proxy output port 712A to perform printing, and the process proceeds to a step S1805.

In the step S1805, the proxy output port 712A or 712B receives the print job, and in a step S1806 in FIG. 19, transfers the inputted job information to the job control server 630 of the server machine to make a scheduling request. In the server machine, the device information control module 631 monitors the status of printing performed by the printer 650, and if determining that the printer 650 is ready to accept a print job, the job controlserver 630 issues a job transmitting instruction to the job control print service 622 of the client apparatus 600.

In a step S1807, the job control print service 622 receives the job transmitting instruction from the job control server 630, and then the process proceeds to a step S1808 wherein the job control print service 622 starts transferring the print data held in the printer queue 722A to the printer 650.

In a step S1809, the job control print service 622 determines whether the alternate printing conditions are satisfied or not by determining whether or not an error occurs in the printer 650 to which the print data is transmitted. Specifically, the job-control print service 622 directly monitors the status of the output printer 650 or checks the status of the printer 650 monitored by the device information control module 631 of the server machine via the job control server 630, thus determining whether or not the status of the monitored printer satisfies the alternate printing conditions in the PDL job information (FIG. 13) set for the print job.

If it is determined in the step S1809 that the alternate printing conditions are not satisfied, the process proceeds to a step S1810 wherein a printing completion notification from the printer is monitored.

Upon receipt of the notification printing completion notification from the printer, the process proceeds to a step S1811 wherein the job control print service 622 erases the print job data of the PDL file received from the PDL driver 602, the PDL job information related to the print job, and so forth from the HD 205, and the process is terminated.

If it is determined in the step S1804 that the alternate printing conditions are satisfied, the process proceeds to a step S1812 wherein the job control print service 622 extracts printers of the same type as the printer corresponding to the PDL driver 602 having generated the print job from a plurality of printers in the system, and displays the alternate printing POP-UP dialogue as shown in FIG. 12 to cause the user to select subsequent processing to be performed on the print job. On this occasion, as described before, printers to be extracted should not necessarily be limited to ones of the same type as a printer designated first for printing, but it is possible to extract printers capable of interpreting the same PDL.

In a step S1813, the job control print service 622 determines which processing has been selected from the following: alternate printing, continuation, and discontinuation.

If it is determined in the step S1813 that the user has selected an alternate printer via the alternate printing POP-UP dialogue to perform alternate printing on the print job, the process proceeds to a step S1814. In the step S1814, an alternate printing management plug-in performs alternate processing.

If it is determined in the step S1813 that continuation has been selected, the process proceeds to the step S1805.

If it is determined in the step S1813 that discontinuation has been selected, the process proceeds to the step S1811.

In the step S1814, the job control print service 622 causes the printer queue 722B corresponding to the alternate printer to perform alternate printing on the print job. Specifically, the job control print service 622 shifts print data of a PDL file managed by the printer queue 722A before alternate processing to the alternate processing printer queue 722B, creates PDL job information for the printer queue 722B, sets alternate printing conditions for the print job set as PDL job information before alternate processing as PDL job information for the alternate processing printer queue 722B, and erases the print data and the job information related to the print job managed by the printer queue 722A before alternate processing. In a step S1815, the alternate processing printer queue 722B starts performing processing, and the process proceeds to the step S1804.

If it is determined in the step 51809 that the alternate printing conditions (manual alternate printing conditions) are satisfied, the process proceeds to a step S1816 wherein the job control print service 622 displays the manual alternating printing POP-UP dialogue as shown in FIG. 12 to cause the user to select subsequent processing to be performed on the print job.

If it is determined in the next step S1817 that the user has selected an alternate printer via the alternate printing POP-UP dialogue to perform alternate printing, the process proceeds to a step S1818.

In the step S1818, the alternate processing management plug-in performs alternate printing. Specifically, the print job is subjected to alternate printing by the printer queue 722B corresponding to the alternate printer. More specifically, the job control print service 622 shifts print data of a PDL file managed by the printer queue 722A before alternate processing to the alternate printer queue 722B, creates PDL job information for the printer queue 722B, sets alternate printing conditions for the print job set as PDL job information before alternate processing as PDL job information for the alternate printer queue 722B, and erases the print data and the job information related to the print job managed by the printer queue 722A before alternate processing.

In a step S1819, the alternate printer queue 722B starts printing processing, and the process proceeds to the step S1805.

If it is determined in the step S1817 that the user has decided to erase the print job (discontinue printing), the process proceeds to the step S1811.

If it is determined in the step S1817 that the user has decided to continue printing, the process proceeds to the step S1810.

As described above, according to the present embodiment, even if a job is shifted from one printer to another by alternate processing, alternate printing conditions for the job are continuously used. As a result, it is possible to prevent a change in alternate printing conditions according to the alternate printer each time alternate printing is performed, and to prevent unexpected alternate printing results depending on the type and properties of the job subjected to alternate processing.

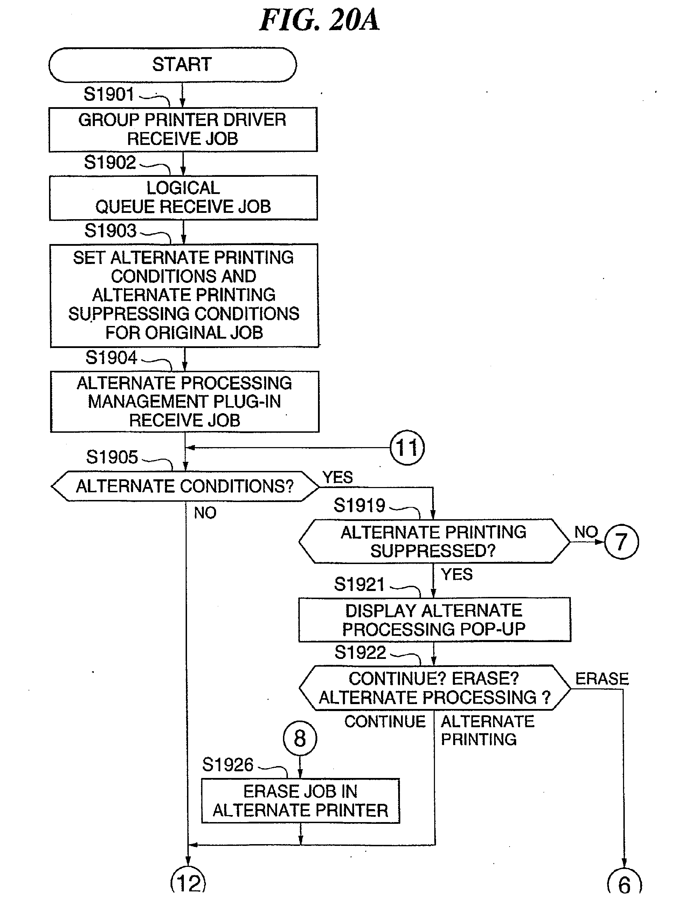

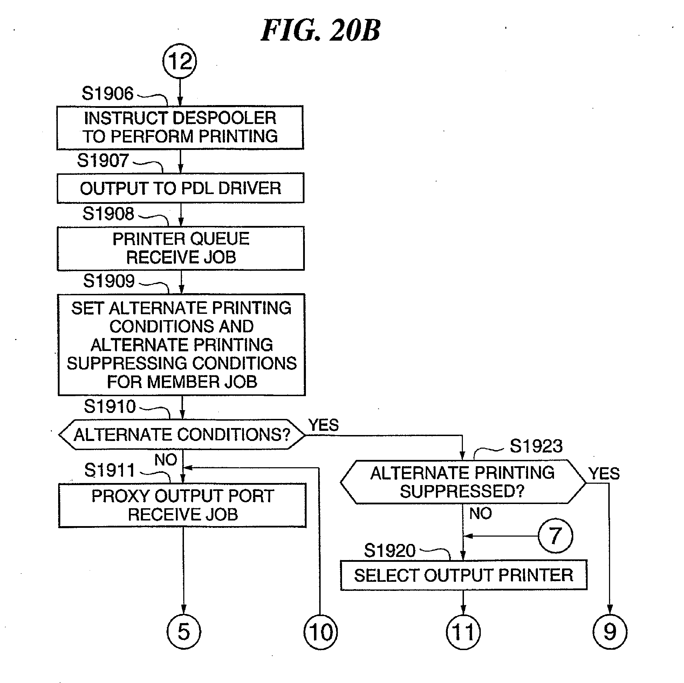

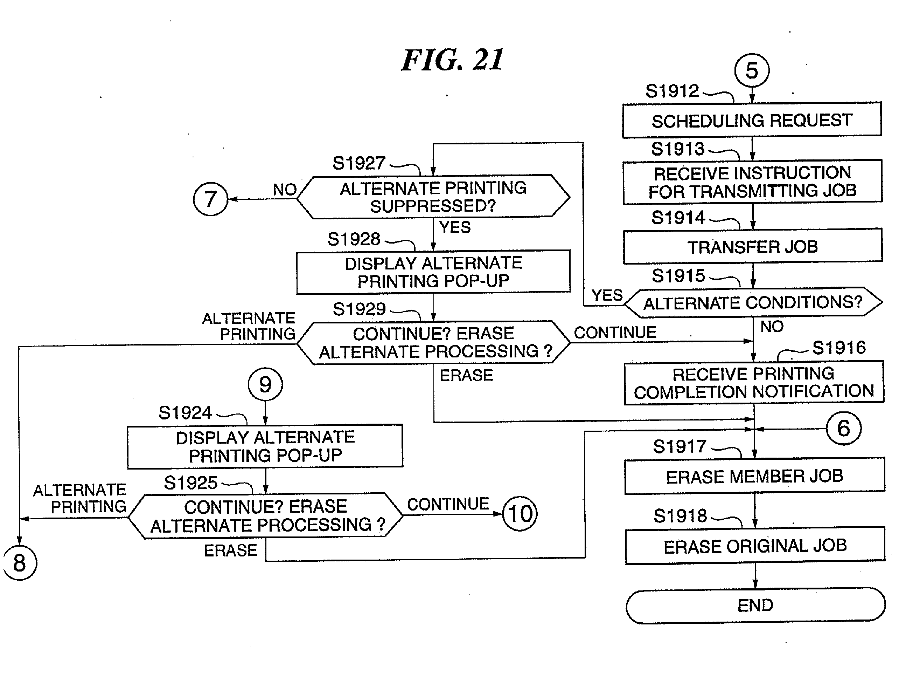

FIGS. 20 and 21 are flow chart showing alternate processing according to a second embodiment of the present invention.

In the alternate processing according to the present embodiment, General print data outputted from the group printer driver 603 to the job control print service 622 and again outputted to the PDL driver 602 which discharges output data depending on the type of a printer is converted into a print job of a PDL file that can be processed according to automatic alternate printing conditions for printers set in the logical queue of the group printer driver 603 so that alternate processing is performed under alternate printing conditions managed in association with the print job. Therefore, the alternate printer can be prevented from operating under automatic alternate printing conditions unexpected by the user. This attains the second object of the present invention.

Further, in the alternate processing in the present embodiment, alternate printing is not automatically performed if some sort of error occurs in a printer. For example, in the case of "off-line", alternate printing is manually performed without automatically performing alternate printing, so that the user can be notified of the occurrence of an error via a displayed dialogue to determine whether printing is to be continued by the same printer or not, whether another printer is to perform alternate printing or not, whether printing is to be canceled or not, or the like. This attains the third object of the present invention.

In a step S1901, the group printer driver 603 receives drawing commands (DDI function) from the application 601 via the drawing function of the OS, and in a step S1902, the printer queue 705 of the job control print service 622 receives print job data of a general print file based on the drawing commands received by the group printer driver 603 via the Windows (registered trademark) print system 660.

In a step S1903, the job control print service 622 sets the automatic alternate printing conditions in FIG. 10 and the automatic alternate printing suppressing conditions in FIG. 11 set in the logical queue 705 as the original job information in FIG. 14 so as to correspond to the print job (original job) data received in the step S1902.

In a step S1904, the alternate processing management plug-in of the job control print service 622 receives the print job, and in a step S1905, the alternate processing management plug-in obtains a member printer name "1" with the highest priority from member printers set in the logical queue information in FIG. 9 and designated for printing. Here; the status of a printer corresponding to the member printer name "1" is found, and it is determined whether the automatic alternate printing conditions in FIG. 14 set for the job are satisfied or not.

For example, in the case where such an error as "sheet exhaustion" occurs in the printer, it is determined that the automatic alternate printing conditions are satisfied if "printer error" is included in the automatic alternate printing conditions, and it is determined that the automatic alternate printing conditions are not satisfied if "printer error" is not included in the automatic alternate printing conditions.

If it is determined in the step S1905 that the automatic alternate printing conditions are not satisfied, the process proceeds to a step S1906 wherein the job control print service 622 instructs the de-spooler 701 to cause the PDL driver 602 corresponding to the member printer "1" with the highest priority for which the automatic alternate printing conditions are determined not to be satisfied.

In a step S1907, the PDL driver 602 instructed to perform printing by the de-spooler 701 outputs drawing commands (GDI function), and thus generates and outputs print data in the format of a PDL file. In a step S1908, the printer queue 722A of the job control print service 622 receives.a print job of the PDL file generated by the PDL driver 602. When the printer queue 722A receives the print job, the printer queue 722A creates job information, as the member job information in FIG. 15.

In a step S1909, the printer queue 722A acquires the automatic alternate printing conditions in FIG. 10 and the automatic alternate printing suppressing conditions in FIG. 11 from the original job information in FIG. 14 managed by the logical queue 705, and sets them as the member job information in FIG. 15.

Before transferring the print job to the proxy output port 712A, in a step S1910, the job control print service 622 acquires the status of the corresponding printer, or checks the status of the printer 650 monitored by the device information control module 631 of the server machine via the job control server 630, thus determining whether or not the status of the monitored printer satisfies the automatic alternate printing conditions in FIG. 14 set in the member job information.

If it is determined in the step S1910 that the automatic alternate printing conditions are not satisfied, the process proceeds to a step S1911.

When the proxy output port 712A receives the print job in the step S1911, the process proceeds to a step S1912 wherein the input job information is delivered to the job control server 630 to make a scheduling request and wait for a job transmitting instruction from the job control server 630. In the server machine, the device information control module 631 monitors the status of printing performed by the printer 650, and if determining that the printer is ready to receive the print job, the job control server 630 issues a job transmitting instruction to the job control print service 622 of the client 600.

In a step S1913, when the job control print service 622 receives the job transmitting instruction from the job control server 630, the process proceeds to a step S1914 wherein the job control print service 622 starts transferring print data held in the printer queue 722A to the printer.

In a step S1915, the job control print service 622 determines whether the alternate printing conditions are satisfied or not by determining whether or not an error occurs in the printer 650 to which the print data is transmitted. Specifically, the job control print service 622 monitors the status of the corresponding printer or checks the status of the printer 650 monitored by the device information control module 631 of the server machine via the job control server 630, thus determining whether or not the status of the monitored printer satisfies the automatic alternate printing conditions in FIG. 14 set as the member job information.

If it is determined in the step S1915 that the alternate printing conditions are not satisfied, the process proceeds to a step S1916.

In the step S1916, the job control print service 622 monitors a printing completion notification from the printer directly or via the server machine. Upon receipt of the notification printing completion notification from the printer, the process proceeds to a step S1917 wherein the job control print service 622 erases the print job data of the PDL file received from the PDL driver 602, the PDL job information related to the print job, and so forth. The process then proceeds to a step S1918 wherein the job control print service 622 erases the general print data and the original job information related to the original job, and the process is terminated.

If it is determined in the step S1915 that the automatic alternate printing conditions are satisfied, the process proceeds to a step S1919. In the step S1919, the job control print service 622 compares the automatic alternate printing suppressing conditions set as the original job information with the status of the printer to determine whether the automatic alternate printing suppressing conditions are satisfied or not.

For example, if such an error as "sheet exhaustion" occurs in the printer, it is determined that the alternate printing conditions are satisfied if "sheet exhaustion" is included in the automatic alternate printing suppressing conditions, and it is determined that the automatic alternate printing suppressing conditions are not satisfied if "sheet exhaustion" is not included in the automatic alternate printing suppressing conditions.

If it is determined in the step S1919 that the automatic alternate printing suppressing conditions are not satisfied, automatic alternate printing is performed. In a step S1920, an output printer selecting process is carried out.

In the step S1920, the job control print service 622 obtains the name of a printer with the second highest priority next to the member printer now being about to perform printing from among member printers set in the logical queue information in FIG. 9 and designated for printing. The process then proceeds to the step S1905 wherein the job control print service 622 determines whether the status of a printer corresponding to the selected member printer satisfies the alternate printing conditions or not.

On the other hand, if it is determined in the step S1919 that the alternate printing suppressing conditions are satisfied, the process proceeds to a step S1921 wherein the job control print service 622 displays the POP-UP dialogue as shown in FIG. 34, and further displays the manual alternating printing POP-UP dialogue as shown in FIG. 35 in response to the depression of an alternate printer select button on the screen of FIG. 34 by the user so that the user can select subsequent processing to be performed on the print job.

The process then proceeds to a step S1922 wherein the job control print service 622 determines whether any of a continue button in FIG. 34 and an alternate printing button and a printing discontinuation button in FIG. 35 has been selected by the user.

As described previously, the manual alternate printing POP-UP dialogue in FIG. 35 shows a list of printers managed by the job control print service 622 since the print system according to the present embodiment performs printing using a general print file via a logical queue and hence alternate printers can be arbitrarily selected.

In the case where the user selects an alternate printer via the manual alternate printing POP-UP dialogue to perform alternate printing on the print job, the process proceeds to the step S1906 wherein the job control print service 622 instructs the de-spooler 701 to perform printing by the printer selected by the user.

As a result, the de-spooler 701 outputs drawing commands (GDI function) based on the general print file managed by the logical queue 705 to the PDL driver 602 corresponding to the selected printer via the drawing function of the OS, and consequently the job control print service 622 receives PDL print data generated by the alternate PDL driver 602, so that the above described printing process is carried out.

If the job control print service 622 determines in the step S1922 that the user has decided to continue printing, the process proceeds to the step S1906 without performing alternate printing so that printing can be continuously performed.

If the job control print service 622 determines in the step 51922 that the user has decided to erase the job, the process proceeds to the step S1917 to erase the print job.

If it is determined in the step S1910 that the alternate printing conditions are satisfied, the process proceeds to a step S1923 wherein the job control print service 622-compares the automatic alternate printing suppressing conditions set as the member job information with the status of the printer to determine whether the automatic alternate printing suppressing conditions are satisfied or not.

If it is determined in the step S1923 that the automatic alternate printing suppressing conditions are not satisfied, automatic alternate printing should be performed, and the process proceeds to the step S1920.

In the step S1920, the job control print service 622 carries out the output printer selecting process.

If it is determined in the step S1923 that the automatic alternate printing suppressing conditions are satisfied, the process proceeds to a step S1924. In the step 51924, as described above, the job control print service 622 displays the POP-UP dialogues as shown in FIGS. 34 and 35 to cause the user to select subsequent processing to be performed on the print job.

In a step S1925, in the case where the user selects an alternate printer via the manual alternate printing POP-UP dialogue to perform alternate printing on the print job, the process proceeds to a step S1926 wherein the job control print service 622 erases the print job of the PDL file now waiting to be printed. In the step S1906, the job control print service 622 then instructs the de-spooler 701 to perform printing by the printer selected by the user.

If it is determined in the step S1925 that the user has depressed the continue button so as to continue printing, the process proceeds to the step S1911 wherein the job control print service 622 continues printing.

If it is determined in the step S1925 that the user has decided to erase the print job, the process proceeds to the step S1917 wherein the job control print service 622 erases the print job.

If it is determined in the step S1915 that the alternate printing conditions are satisfied, the process proceeds to a step S1927 wherein the job control print service 622 compares the automatic alternate printing suppressing conditions set as the member job information with the status of the printer to determine whether the automatic alternate printing suppressing conditions are satisfied or not.

If it is determined in the step S1927 that the alternate printing suppressing conditions are not satisfied, the process proceeds to the step S1920 wherein automatic alternate printing is performed.

In the step S1920, the job control print service 622 carries out the output printer selecting process in which a printer with the highest priority is selected in the above described manner so as to perform automatic alternate printing.

If it is determined in the step S1927 that the alternate printing suppressing conditions are satisfied, the process proceeds to a step S1928.

In the step S1928, the job control print service 622 displays the POP-UP dialogues as shown in FIGS. 34 and 35 to cause the user to select subsequent processing to be performed on the print job. In a step 51929, in the case where the user selects an alternate printer via the manual alternate printing POP-UP dialogue so as to perform alternate printing on the print job, the process proceeds to the step S1926 wherein the job control print service 622 erases the print job of the PDL file now waiting to be printed. In the step S1906, the job control print service 622 then instructs the de-spooler 701 to perform printing by the printer selected by the user. The de-spooler 701 performs processing as described above.

If the job control print service 622 determines in the step S1929 that the user has decided to continue printing, the process proceeds to the step S1916 wherein printing is continuously performed.

If the job control print service 622 determines in the step S1929 that the user has decided to erase the print job, the process proceeds to the step S1917 wherein the print job is erased.

As described above, according to the present embodiment, an original job related to a general print file is managed together with original job information in a logical queue, and alternate printing conditions set as part of the original job information are also applied as alternate printing conditions as part of member job information on a member job of a data file to be actually printed by a printer. As a result, if a printer actually performs printing, alternate processing is performed under the alternate printing conditions (automatic alternate printing conditions or automatic alternate printing suppressing conditions) set for the printer selected by the user.

Further, in automatic alternate printing, automatic alternate printing suppressing conditions under which alternate printing is manually performed without automatically performing alternate printing and which are set as part of the original job information are also applied as automatic alternate printing suppressing conditions set as part of the member job information. As a result, it is possible to prevent a change in automatic alternate printing suppressing conditions even if output printers are changed by alternate processing.

It is to be understood that the present invention is not limited to the apparatus according to the above described embodiments, but may either be applied to a system composed of a plurality of apparatuses or to a single apparatus.

Further, it is to be understood that the object of the present invention may also be accomplished by supplying a system or an apparatus with a storage medium in which a program code of software which realizes the functions of any of the above described embodiments is stored, and causing a computer (or CPU or MPU) of the system or apparatus to read out and execute the program code stored in the storage medium.

In this case, the program code itself read from the storage medium realizes the functions of any of the above described embodiments, and hence the program code and a storage medium on which the program code is stored constitute the present invention.

The storage medium for supplying the program code is not limited to a ROM, and a floppy (registered trademark) disk, a hard disk, an optical disk, a magnetic-optical disk, a CD-ROM, a CD-R, a CD-RW, a DVD-ROM, a DVD-RAM, a DVD-RW, a DVD+RW, a magnetic tape, a nonvolatile memory card, and a download carried out via a network may be used.

Further, it is to be understood that the functions of any of the above described embodiments may be accomplished not only by executing the program code read out by a computer, but also by causing an OS (operating system) or the like which operates on the computer to perform a part or all of the actual operations based on instructions of the program code.

Further, it is to be understood that the functions of any of the above described embodiments may be accomplished by writing the program code read out from the storage medium into an expansion board inserted into a computer or a memory provided in an expansion unit connected to the computer and then causing a CPU or the like provided in the expansion board or the expansion unit to perform a part or all of the actual operations based on instructions of the program code.

As many apparently widely different embodiments of the present invention can be made without departing from the spirit and scope thereof, it is to be understood that the invention is not limited to the specific embodiments thereof except as defined in the appended claims.

According to the embodiments described above in detail, alternate printing conditions are set in an external processing apparatus in association with job data, and hence it is possible to perform alternate processing even if alternate printing conditions set for processing apparatuses that carry out alternate processing on jobs are different, so that the user can obtain his/her desired alternate processing results.

Further, automatic alternate printing conditions are set in first job data in association with second job data including a data file to be processed by an external processing apparatus, and hence alternate processing can be performed under alternating printing conditions set for a processing apparatus selected by the user, so that even when the user selects a processing apparatus that outputs general processing data as an output apparatus, the user can obtain his/her desired alternate processing results.

Furthermore, automatic alternate printing suppressing conditions are set in first job data in association with second job data including a data file to be processed by an external processing apparatus, and hence it is possible to switch to manual alternate processing when automatic alternate printing is not desired, so that the user can obtain his/her desired alternate processing results.

## Claims

1. An information processing apparatus that generates a print job to be printed by a first printing device, comprising:
a setting device that sets alternate printing conditionsunder which the first printing device is inhibited from performing printing;
a determination device that determines whether alternate printing is to be performed by a second printing device according to the alternate printing conditions set by said setting device and a status of the first printing device; and
an alternate processing device operable when said determination device determines that alternate printing is to be performed, for transmitting the print job to the second printing device so that alternate printing is performed on the print job by the second printing device;
wherein said alternate processing device manages the alternate printing conditions set by said setting device in association with the print job; and
wherein said determination device determines whether alternate printing is to be performed according to the alternate printing conditions managed in association with the print job.

2. An information processing apparatus according to claim 1, further comprising a physical printer managing device that receives a print job generated by a printer driver and manages the print job; and
wherein said setting device sets alternate printing conditions for said physical printer managing device, and said alternate processing device manages the alternate printing conditions set for said physical printer managing device and managed in association with the print job received by said physical printer managing device.

3. An information processing apparatus according to claim 2, wherein said alternate processing device transmits the print job to the second printing device of same type as the first printing device corresponding to the printer driver to cause the second printing device to perform alternate printing.

4. An information processing apparatus according to claim 1, further comprising:
a virtual printer driver that generates a general print file containing general document data independent of a printing device according to drawing instructions outputted from an application; and
a logical printer managing device that receives the general print file generated by said virtual printer driver and manages the general print file; and
wherein said setting device sets alternate printing conditions for said logical printer managing device, and said alternate processing device manages the alternate printing conditions set for said logical printer managing device in association with a print job of the general print file received by said logical printer managing device.

5. An information processing apparatus according to claim 4, wherein said alternate processing device transmits the print job of the general print file to one selected from among a plurality of printing devices as the second printing device independent of the first printing device designated first for output to cause the selected one printing device to perform alternate printing.

6. An information processing apparatus according to claim 5, wherein said alternate processing device is operable when alternate printing is performed, for outputting drawing instructions to a printer driver of the selected one printing device based on the general print file managed by said logical printer managing device.

7. An information processing apparatus according to claim 4, wherein said setting device sets automatic alternate printing conditions under which alternate processing is automatically performed and manual alternate printing conditions under which alternate processing is manually performed as the alternate printing conditions set for said logical printer managing device; and
said alternate processing device manages the automatic processing conditions and the manual processing conditions set for said logical printer managing device in association with print jobs of general print files received by said logical printer managing device.

8. A print system comprising:
a plurality of first printing devices; and
an information processing apparatus that generates a print job to be printed by any of the first printing apparatuses;
said information processing apparatus comprising:
a setting device that sets alternate printing conditions under which the first printing device is inhibited from performing printing;
a determination device that determines whether alternate printing is to be performed by a second printing device according to the alternate printing conditions set by said setting device and a status of the first printing device; and
an alternate processing device operable when said determination device determines that alternate printing is to be performed, for transmitting the print job to the second printing device so that alternate printing is performed on the print job by the second printing device;
wherein said alternate processing device manages the alternate printing conditions set by said setting device in association with the print job; and
wherein said determination device determines whether alternate printing is to be performed according to the alternate printing conditions managed in association with the print job.

9. A printing control method of controlling printing performed by an information processing apparatus that generates a print job to be printed by a first printing device, comprising:
a setting step of setting alternate printing conditions under which the first printing device is inhibited from performing printing;
a determination step of determining whether alternate printing is to be performed by a second printing device according to the alternate printing conditions set by said setting step and a status of the first printing device; and
an alternate processing step of transmitting the print job to the second printing device so that alternate printing is performed on the print job by the second printing device when it is determined in said determination step that alternate printing is to be performed; and
wherein said alternate processing step comprises managing the alternate printing conditions set by said setting step in association with the print job; and
wherein said determination step comprises determining whether alternate printing is to be performed according to the alternate printing conditions managed in association with the print job.

10. A printing control method according to claim 9, further comprising a physical printer managing step of receiving a print job generated by a printer driver and managing the print job; and
wherein said setting step comprises setting alternate printing conditions for said physical printer managing step, and said alternate processing step comprises managing the alternate printing conditions set for said physical printer managing step and managed in association with the print job received in said physical printer managing step.

11. A printing control method according to claim 10, wherein said alternate processing step comprises transmitting the print job to the second printing device of same type as the first printing device corresponding to the printer driver to cause the second printing device to perform alternate printing.

12. A printing control method according to claim 9, further comprising:
a virtual printer driver step of generating a general print file containing general document data independent of a printing device according to drawing instructions outputted from an application; and
a logical printer managing step of receiving the general print file generated in said virtual printer driver step and managing the general print file; and
wherein said setting step comprises setting alternate printing conditions for said logical printer managing step; and
said alternate processing step comprises managing the alternate printing conditions set in said logical printer managing step in association with a print job of the general print file received in said logical printer managing step.

13. A printing control method applied to an information processing apparatus according to claim 12, wherein said alternate processing step comprises transmitting the print job of the general print file to one selected from among a plurality of printing devices as the second printing device independent of the first printing device designated first for output to cause the selected one printing device to perform alternate printing.

14. A printing control method according to claim 13, wherein said alternate processing step comprises outputting drawing instructions to a printer driver of the selected one printing device based on the general print file managed in said logical printer managing step when alternate printing is performed.

15. A printing control method according to claim 12, wherein said setting step comprises setting automatic alternate printing conditions under which alternate processing is automatically performed and manual alternate printing conditions under which alternate processing is manually performed as the alternate printing conditions set for said logical printer managing step; and
said alternate processing step comprises managing the automatic processing conditions and the manual processing conditions set for said logical printer managing step in association with print jobs of general print files received in said logical printer managing step.

16. A printing control program for implementing a printing control method applied to an information processing apparatus that generates a print job to be printed by a first printing device, comprising:
a setting module for setting alternate printing conditions under which the first printing device is inhibited from performing printing;
a determination module for determining whether alternate printing is to be performed by a second printing device according to the alternate printing conditions set by said setting module and a status of the first printing device; and
an alternate processing module for transmitting the print job to the second printing device so that alternate printing is performed on the print job by the second printing device when said determination module determines that alternate printing is to be performed; and
wherein said alternate processing module manages the alternate printing conditions set by said setting module in association with the print job; and
wherein said determination module determines whether alternate printing is to be performed according to the alternate printing conditions managed in association with the print job.

17. A printing control program according to claim 16, further comprising a physical printer managing module for receiving a print job generated by a printer driver and managing the print job; and
wherein said setting module sets alternate printing conditions for said physical printer managing module, and said alternate processing module manages the alternate printing conditions set for said physical printer managing module and managed in association with the print job received by said physical printer managing module.

18. A printing control program according to claim 17, wherein said alternate processing module transmits the print job to the second printing device of same type as the first printing device corresponding to the printer driver to cause the second printing device to perform alternate printing.

19. A printing control program according to claim 16, further comprising:
a virtual printer driver module for generating a general print file containing general document data independent of a printing device according to drawing instructions outputted from an application; and
a logical printer managing module for receiving the general print file generated by said virtual printer driver module and managing the general print file; and
wherein said setting module sets alternate printing conditions for said logical printer managing module, and said alternate processing module manages the alternate printing conditions set for said logical printer managing module in association with a print job of the general print file received by said logical printer managing module.

20. A printing control program according to claim 19, wherein said alternate processing module transmits the print job of the general print file to one selected from among a plurality of printing devices as the second printing device independent of the first printing device designated first for output to cause the selected one printing device to perform alternate printing.

21. A printing control program according to claim 20, wherein said alternate processing module outputs drawing instructions to a printer driver of the selected one printing device based on the general print file managed by said logical printer managing module when alternate printing is performed.

22. A printing control program according to claim 19, wherein said setting module sets automatic alternate printing conditions under which alternate processing is automatically performed and manual alternate printing conditions under which alternate processing is manually performed as the alternate printing conditions set for said logical printer managing module; and
said alternate processing module manages the automatic processing conditions and the manual processing conditions set for said logical printer managing module in association with print jobs of general print files received by said logical printer managing module.
